# FASCICULE DE BREVET EUROPEEN

(11) **EP 3 695 088 B1**
(45) Date de publication et mention de la délivrance du brevet: **17.11.2021**
(21) Numéro de dépôt: 18786707.2
(22) Date de dépôt: 09.10.2018
(51) Int. Cl.: E06B 9/68, E06B 9/72, H02K 5/22, H02K 15/14

(54) **ACTIONNEUR ÉLECTROMÉCANIQUE TUBULAIRE ET INSTALLATION DOMOTIQUE COMPRENANT UN TEL ACTIONNEUR**
ROHRFÖRMIGER ELEKTROMECHANISCHER AKTUATOR UND HEIMAUTOMATIONSANLAGE MIT SOLCH EINEM AKTUATOR
TUBULAR ELECTROMECHANICAL ACTUATOR AND HOME AUTOMATION EQUIPMENT INCLUDING SUCH AN ACTUATOR

(30) Priorité: 10.10.2017 FR 1759469
(43) Date de publication de la demande: 19.08.2020
(73) Titulaire: Somfy Activites SA, 74300 Cluses (FR)
(72) Inventeur: MEYNET, Emilie, 74300 Cluses (FR); DESBIOLLES, Claude, 74800 Eteaux (FR); BESOMBES, Jérôme, 74800 La Roche Sur Foron (FR); GARDIC, Pierre-André, 74800 Saint Sixt (FR)
(74) Mandataire: Lavoix
(86) Numéro de dépôt international: PCT/EP2018/077461
(87) Numéro de publication internationale: WO 2019/072837

(56) Documents cités:
- FR-A1- 2 983 368
- US-A1- 2008 022 597

## Description

La présente invention concerne un actionneur électromécanique tubulaire et une installation domotique de fermeture ou de protection solaire comprenant un tel actionneur.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document FR 2 983 368 A1 qui décrit un actionneur électromécanique tubulaire pour une installation domotique de fermeture ou de protection solaire.

L'actionneur électromécanique comprend un moteur électrique, un réducteur, une unité électronique de contrôle, un dispositif de connexion électrique, un carter et un élément d'obturation. L'unité électronique de contrôle comprend un boîtier et une carte électronique. La carte électronique est disposée à l'intérieur du boîtier, dans une configuration assemblée de l'unité électronique de contrôle. Le dispositif de connexion électrique est configuré pour relier électriquement la carte électronique de l'unité électronique de contrôle au moteur électrique, dans une configuration assemblée de l'actionneur électromécanique. Le carter est creux et configuré pour loger l'unité électronique de contrôle, le moteur électrique et le réducteur. L'élément d'obturation est configuré pour obturer une extrémité du carter.

Le boîtier de l'unité électronique de contrôle comprend des pions, au niveau d'une première extrémité, configurés pour coopérer avec des encoches ménagées dans le moteur électrique, dans la configuration assemblée de l'actionneur électromécanique.

Le boîtier de l'unité électronique de contrôle comprend également des ouvertures, au niveau d'une deuxième extrémité opposée à la première extrémité, configurées pour coopérer avec des pattes élastiquement déformables de l'élément d'obturation, dans la configuration assemblée de l'actionneur électromécanique.

Cependant, cet actionneur électromécanique présente l'inconvénient de relier électriquement la carte électronique de l'unité électronique de contrôle au moteur électrique au moyen d'une carte électronique additionnelle et d'un toron de câbles électriques souple. La carte électronique additionnelle est disposée à l'intérieur d'une enveloppe du moteur électrique. Une première extrémité du toron de câbles électriques est reliée électriquement à la carte électronique additionnelle du moteur électrique. Une deuxième extrémité libre du toron de câbles électriques comprend un connecteur électrique configuré pour coopérer avec un connecteur électrique de la carte électronique de l'unité électronique de contrôle.

En outre, le toron de câbles électriques présente une longueur la plus courte possible, de sorte à éviter un contact avec une partie active de la carte électronique de l'unité électronique de contrôle.

Par ailleurs, l'assemblage du connecteur électrique appartenant au toron de câbles électriques avec le connecteur électrique de la carte électronique de l'unité électronique de contrôle est mis en oeuvre dans un encombrement réduit et est réalisé en partie en aveugle.

Par conséquent, l'assemblage du connecteur électrique appartenant au toron de câbles électriques avec le connecteur électrique de la carte électronique de l'unité électronique de contrôle est peu aisé, lors de la fabrication de l'actionneur électromécanique.

En outre, un tel assemblage requiert une dextérité certaine de la part des opérateurs de fabrication.

Par ailleurs, un tel assemblage peut engendrer des risques d'un point de vue de la qualité de l'actionneur électromécanique, puisque l'enfoncement du connecteur électrique appartenant au toron de câbles électriques par rapport au connecteur électrique de la carte électronique de l'unité électronique de contrôle n'est pas garanti, lors de la fabrication de l'actionneur électromécanique.

En outre, un tel assemblage peut engendrer des risques d'un point de vue de la qualité de l'actionneur électromécanique, puisque le connecteur électrique appartenant au toron de câbles électriques peut être endommagé, lors du transport et de la manipulation du toron de câbles électriques.

Par conséquent, le coût d'obtention de l'actionneur électromécanique est élevé.

La présente invention a pour but de résoudre les inconvénients précités et de proposer un actionneur électromécanique tubulaire, ainsi qu'une installation domotique de fermeture ou de protection solaire comprenant un tel actionneur, permettant de simplifier la fabrication de l'actionneur électromécanique, tout en minimisant les coûts d'obtention de l'actionneur électromécanique et en s'affranchissant de défauts de fabrication de l'actionneur électromécanique.

A cet effet, la présente invention vise, selon un premier aspect, un actionneur électromécanique tubulaire pour une installation domotique de fermeture ou de protection solaire, l'actionneur électromécanique comprenant au moins :
- un moteur électrique,
- un réducteur,
- une unité électronique de contrôle, l'unité électronique de contrôle comprenant un boîtier et une carte électronique, la carte électronique étant disposée à l'intérieur du boîtier, dans une configuration assemblée de l'unité électronique de contrôle,
- un premier dispositif de connexion électrique, le premier dispositif de connexion électrique étant configuré pour relier électriquement la carte électronique de l'unité électronique de contrôle au moteur électrique, dans une configuration assemblée de l'actionneur électromécanique, et
- un carter, le carter étant creux et configuré pour loger au moins l'unité électronique de contrôle, le moteur électrique et le réducteur.

Selon l'invention, le premier dispositif de connexion électrique comprend au moins :
- des premiers éléments de connexion électrique configurés pour relier électriquement la carte électronique de l'unité électronique de contrôle à des éléments de connexion électrique du moteur électrique, dans la configuration assemblée de l'actionneur électromécanique, et
- des deuxièmes éléments de connexion électrique configurés pour relier électriquement la carte électronique de l'unité électronique de contrôle à des éléments de connexion électrique d'une carte électronique additionnelle du moteur électrique, dans la configuration assemblée de l'actionneur électromécanique.

Le premier dispositif de connexion électrique est configuré, d'une part, pour s'enficher sur un bord d'une plaquette de circuit imprimé de la carte électronique de l'unité électronique de contrôle et, d'autre part, pour coopérer avec des pistes électriques de la carte électronique de l'unité électronique de contrôle.

En outre, les premiers et deuxièmes éléments de connexion électrique du premier dispositif de connexion électrique sont des éléments de connexion électrique configurés pour coopérer directement avec les éléments de connexion électrique respectifs du moteur électrique et de la carte électronique additionnelle du moteur électrique.

Ainsi, le premier dispositif de connexion électrique permet de réaliser une liaison électrique à partir de la carte électronique de l'unité électronique de contrôle, d'une part, vers le moteur électrique et, d'autre part, vers la carte électronique additionnelle du moteur électrique, sans utiliser des câbles électriques souples.

De cette manière, un tel assemblage de la carte électronique de l'unité électronique de contrôle avec le moteur électrique au moyen du premier dispositif de connexion électrique est simplifié, tout en minimisant les coûts d'obtention de l'actionneur électromécanique et en s'affranchissant de défauts de fabrication de l'actionneur électromécanique.

Selon un premier mode de réalisation, le premier dispositif de connexion électrique comprend un unique boîtier. En outre, le boîtier comporte au moins les premiers et deuxièmes éléments de connexion électrique du premier dispositif de connexion électrique.

Selon un deuxième mode de réalisation, le premier dispositif de connexion électrique comprend un premier boîtier et un deuxième boîtier. Le deuxième boîtier est configuré pour être assemblé sur le premier boîtier. Le premier boîtier comporte au moins les premiers éléments de connexion électrique du premier dispositif de connexion électrique. En outre, le deuxième boîtier comporte au moins les deuxièmes éléments de connexion électrique du premier dispositif de connexion électrique.

Selon une caractéristique préférée de l'invention, le premier dispositif de connexion électrique comprend également un troisième élément de connexion électrique configuré pour relier électriquement la carte électronique de l'unité électronique de contrôle au carter de l'actionneur électromécanique.

Selon une caractéristique avantageuse de l'invention, le troisième élément de connexion électrique du premier dispositif de connexion électrique est configuré pour réaliser une liaison électrique entre le carter de l'actionneur électromécanique et la carte électronique de l'unité électronique de contrôle, de sorte à évacuer des charges électrostatiques au moyen d'un dispositif de décharge de charges électrostatiques.

Selon une autre caractéristique avantageuse de l'invention, le carter de l'actionneur électromécanique est réalisé dans un matériau électriquement conducteur.

Selon une autre caractéristique avantageuse de l'invention, l'actionneur électromécanique comprend un deuxième dispositif de connexion électrique configuré pour relier électriquement la carte électronique de l'unité électronique de contrôle à un câble d'alimentation électrique, dans la configuration assemblée de l'actionneur électromécanique.

Selon une autre caractéristique avantageuse de l'invention, l'actionneur électromécanique comprend également un élément d'obturation et un élément d'interface. L'élément d'obturation est configuré pour obturer une extrémité du carter. L'élément d'interface est disposé entre l'élément d'obturation et l'unité électronique de contrôle. En outre, l'élément d'interface est configuré pour coopérer, d'une part, avec le deuxième dispositif de connexion électrique et, d'autre part, avec le câble d'alimentation électrique.

La présente invention vise, selon un deuxième aspect, une installation domotique de fermeture ou de protection solaire comprenant un écran enroulable sur un tube d'enroulement entraîné en rotation par un actionneur électromécanique tubulaire conforme à l'invention.

Cette installation domotique présente des caractéristiques et avantages analogues à ceux décrits précédemment en relation avec l'actionneur électromécanique tubulaire tel que mentionné ci-dessus.

D'autres particularités et avantages de l'invention apparaîtront encore dans la description ci-après, faite en référence aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue schématique en coupe axiale et partielle de l'installation domotique illustrée aux figures 1 et 2 montrant un actionneur électromécanique tubulaire de l'installation ;
- la figure 4 est une vue schématique en coupe de l'actionneur électromécanique illustré à la figure 3, selon un plan de coupe décalé par rapport à un axe longitudinal de l'actionneur ;
- la figure 5 est une vue schématique en coupe partielle de l'actionneur électromécanique illustré à la figure 3, selon un plan de coupe passant par l'axe longitudinal de l'actionneur ;
- la figure 6 est une vue schématique en coupe et en perspective d'une partie de l'actionneur électromécanique illustré aux figures 4 et 5, représentant un élément d'obturation, un élément d'interface et un élément d'inhibition ;
- la figure 7 est une première vue schématique éclatée et en perspective d'une partie de l'actionneur électromécanique illustré aux figures 4 et 5, représentant une unité électronique de contrôle, l'élément d'interface et un capot d'un moteur électrique ;
- la figure 8 est une deuxième vue schématique éclatée et en perspective d'une partie de l'actionneur électromécanique illustré aux figures 4 et 5, selon un autre angle de vue, représentant l'unité électronique de contrôle, l'élément d'interface, un moteur électrique, le capot du moteur électrique et un câble d'alimentation électrique ;
- la figure 9 est une première vue schématique en perspective d'un premier dispositif de connexion électrique de l'actionneur électromécanique illustré aux figures 4 à 5, 7 et 8 ;
- la figure 10 est une deuxième vue schématique en perspective, selon un autre angle, du premier dispositif de connexion électrique de l'actionneur électromécanique illustré aux figures 4 à 5, 7 et 8;
- la figure 11 est une première vue schématique en perspective d'un deuxième dispositif de connexion électrique de l'actionneur électromécanique illustré aux figures 4 à 5, 7 et 8 ;
- la figure 12 est une deuxième vue schématique en perspective, selon un autre angle, du deuxième dispositif de connexion électrique de l'actionneur électromécanique illustré aux figures 4 à 5, 7 et 8 ;
- la figure 13 est une vue schématique en perspective d'un tronçon d'un boîtier de l'unité électronique de contrôle illustrée aux figures 4 à 5, 7 et 8 ;
- la figure 14 est une vue schématique éclatée et en perspective d'une partie de l'actionneur illustré aux figures 4 et 5, représentant une partie d'un carter de l'actionneur électromécanique, un réducteur, un arbre de sortie, un embout et un élément de maintien ;
- la figure 15 est une vue schématique éclatée et en perspective d'une partie de l'actionneur électromécanique illustré aux figures 4 et 5, représentant une partie du carter de l'actionneur électromécanique, une couronne, l'élément d'obturation, l'élément d'interface et l'élément d'inhibition ; et
- la figure 16 est une vue schématique de l'actionneur électromécanique illustré aux figures 4 et 5, représentative d'un procédé d'assemblage de cet actionneur.

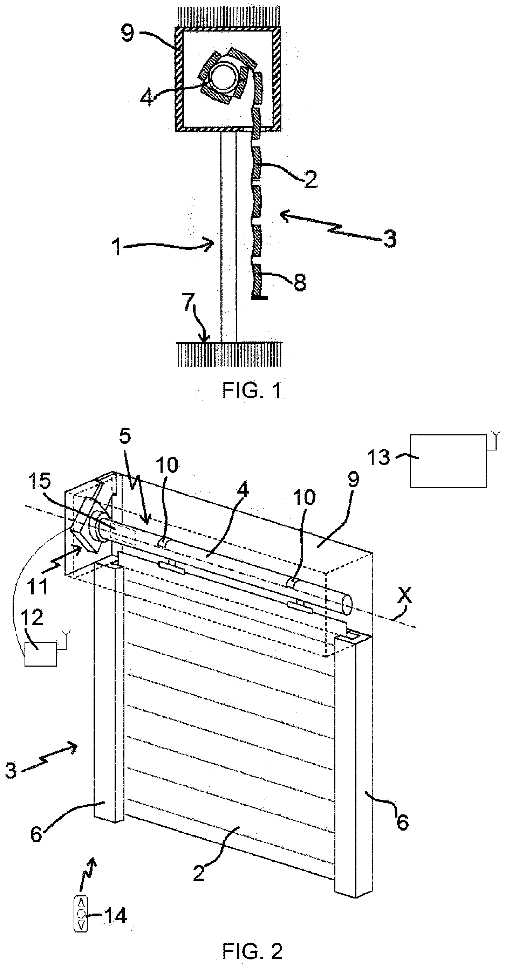

On décrit tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du tablier 2 du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

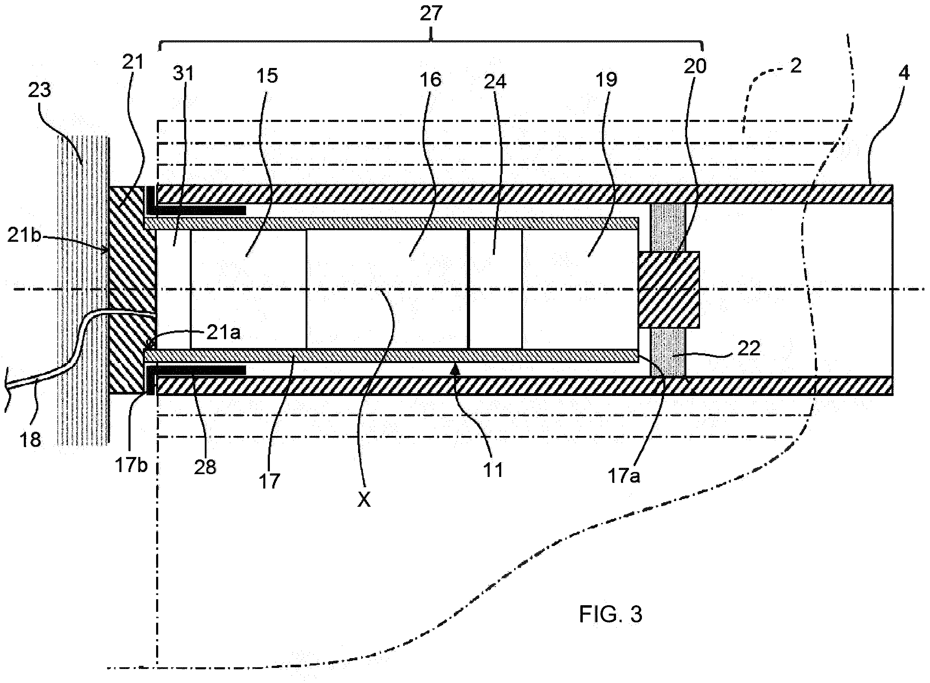

On décrit à présent, plus en détail et en référence aux figures 3 à 5, l'actionneur électromécanique 11 appartenant à l'installation domotique des figures 1 et 2.

L'actionneur électromécanique 11 comprend une unité électronique de contrôle 15, un moteur électrique 16 et un réducteur 19.

L'actionneur électromécanique 11 comprend également un arbre de sortie 20.

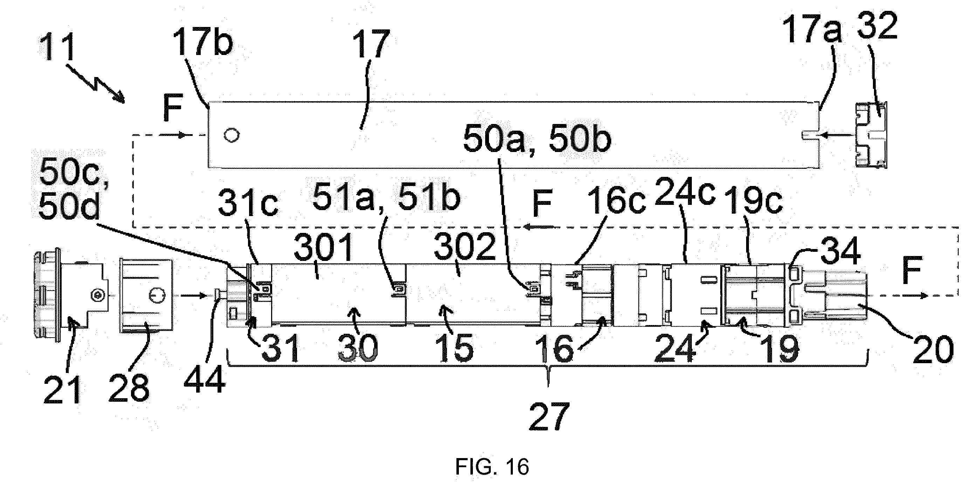

Ici, l'unité électronique de contrôle 15, le moteur électrique 16, le réducteur 19 et l'arbre de sortie 20 forment un ensemble 27, tel qu'illustré aux figures 3 et 16.

Ainsi, l'ensemble 27 est formé par des organes de l'actionneur électromécanique 11, dont l'unité électronique de contrôle 15, le moteur électrique 16, le réducteur 19 et l'arbre de sortie 20 font partie intégrante.

Le moteur électrique 16 comprend un rotor et un stator, non représentés, positionnés de manière coaxiale autour d'un axe de rotation X, qui est également l'axe de rotation du tube d'enroulement 4 en configuration montée du dispositif d'entraînement motorisé 5.

Ici, le réducteur 19 est du type à engrenages.

En pratique, le moteur électrique 16 comprend un arbre de sortie, non représenté, configuré pour coopérer avec un arbre d'entrée, non représenté, du réducteur 19, dans une configuration assemblée de l'actionneur électromécanique 11.

Des moyens de commande de l'actionneur électromécanique 11, permettant le déplacement de l'écran 2 du dispositif d'occultation 3, comprennent au moins l'unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres, en particulier d'ordres radioélectriques émis par un émetteur d'ordres, tel que la télécommande 14 destinée à commander l'actionneur électromécanique 11 ou l'une des unités de commande locale 12 ou centrale 13.

Le module de réception d'ordres peut également permettre la réception d'ordres transmis par des moyens filaires.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

L'actionneur électromécanique 11 comprend également un carter 17, en particulier de forme tubulaire.

Le carter 17 de l'actionneur électromécanique 11 est, préférentiellement, de forme cylindrique et, plus particulièrement, de section circulaire.

Le carter 17 est creux et configuré pour loger l'unité électronique de contrôle 15, le moteur électrique 16 et le réducteur 19. En outre, le carter 17 peut, éventuellement, être configuré pour loger en partie l'arbre de sortie 20.

Le carter 17 comprend une première extrémité 17a et une deuxième extrémité 17b. La deuxième extrémité 17b est opposée à la première extrémité 17a.

L'arbre de sortie 20 de l'actionneur électromécanique 11 dépasse du carter 17 au niveau de la première extrémité 17a du carter 17, dans la configuration assemblée de l'actionneur électromécanique 11.

Ainsi, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, l'arbre de sortie 20 de l'actionneur électromécanique 11 est accouplé, par un élément de liaison 22, au tube d'enroulement 4, en particulier un élément de liaison en forme de roue.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique à partir du réseau d'alimentation électrique du secteur.

Avantageusement, l'actionneur électromécanique 11 comprend également un frein 24.

Ici, le frein 24 de l'actionneur électromécanique 11 fait partie intégrante de l'ensemble 27.

A titre d'exemple nullement limitatif, le frein 24 peut être un frein à ressort, un frein à came ou un frein électromagnétique.

Avantageusement, l'actionneur électromécanique 11 peut également comprendre un dispositif de détection de fin de course et/ou d'obstacle, pouvant être mécanique ou électronique.

L'actionneur électromécanique 11 comprend également un élément d'obturation 21 de la deuxième extrémité 17b du carter 17.

L'élément d'obturation 21 dépasse du carter 17 au niveau de la deuxième extrémité 17b du carter 17, dans la configuration assemblée de l'actionneur électromécanique 11.

En pratique, l'élément d'obturation 21 est disposé à une extrémité de l'actionneur électromécanique 11 opposée à celle au niveau de laquelle l'arbre de sortie 20 fait saillie à partir du carter 17.

Ici, le carter 17 de l'actionneur électromécanique 11 est fixé à un support 23, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

Avantageusement, l'élément d'obturation 21 est réalisé en matière plastique et, plus particulièrement, par moulage.

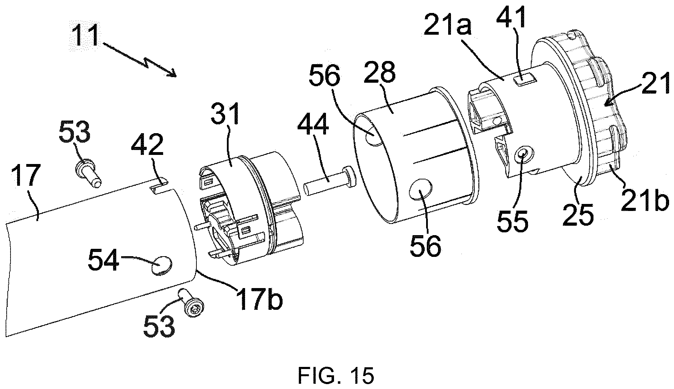

Dans l'exemple de réalisation illustré aux figures 3 à 6 et 15 à 16, l'élément d'obturation 21 est une unique pièce, en particulier de type monobloc.

Ici, l'élément d'obturation 21 est une pièce de révolution.

L'élément d'obturation 21 comprend une première partie 21a configurée pour coopérer avec le carter 17 de l'actionneur électromécanique 11 et une deuxième partie 21b configurée pour coopérer avec le support 23.

Au moins la première partie 21a de l'élément d'obturation 21 est de forme générale cylindrique et est disposée à l'intérieur du carter 17 de l'actionneur électromécanique 11, dans la configuration assemblée de l'actionneur électromécanique 11.

Avantageusement, l'élément d'obturation 21 comprend une butée 25 configurée pour coopérer avec le carter 17, au niveau de la deuxième extrémité 17b du carter 17, dans la configuration assemblée de l'actionneur électromécanique 11, en particulier par l'intermédiaire d'une couronne 28.

Ainsi, la butée 25 de l'élément d'obturation 21 permet de limiter l'enfoncement de la première partie 21a de l'élément d'obturation 21 dans le carter 17.

En outre, la butée 25 de l'élément d'obturation 21 délimite les première et deuxième parties 21a, 21b de l'élément d'obturation 21.

Ainsi, seule la première partie 21a de l'élément d'obturation 21 est disposée à l'intérieur du carter 17 de l'actionneur électromécanique 11, suite à l'emmanchement de l'élément d'obturation 21 à l'intérieur du carter 17, jusqu'à la butée 25.

Ici, la butée 25 de l'élément d'obturation 21 est réalisée sous la forme d'une collerette, en particulier de forme cylindrique et plane.

En variante, non représentée, l'élément d'obturation 21 comprend au moins deux pièces. La première pièce de l'élément d'obturation 21 comprend la première partie 21a de l'élément d'obturation 21 configurée pour coopérer avec le carter 17 de l'actionneur électromécanique 11. La deuxième pièce de l'élément d'obturation 21 comprend la deuxième partie 21b de l'élément d'obturation 21 configurée pour coopérer avec le support 23.

Avantageusement, le dispositif d'entraînement motorisé 5 comprend la couronne 28. La couronne 28 est disposée autour du carter 17 de l'actionneur électromécanique 11 et au niveau de la deuxième extrémité 17b du carter 17.

Ici, le tube d'enroulement 4 est entraîné en rotation autour de l'axe de rotation X et du carter 17 de l'actionneur électromécanique 11 soutenu par l'intermédiaire de deux liaisons pivot. La première liaison pivot est réalisée au niveau d'une première extrémité du tube d'enroulement 4 au moyen de la couronne 28. La couronne 28 permet ainsi de réaliser un palier. La deuxième liaison pivot, non représentée, est réalisée au niveau d'une deuxième extrémité du tube d'enroulement 4.

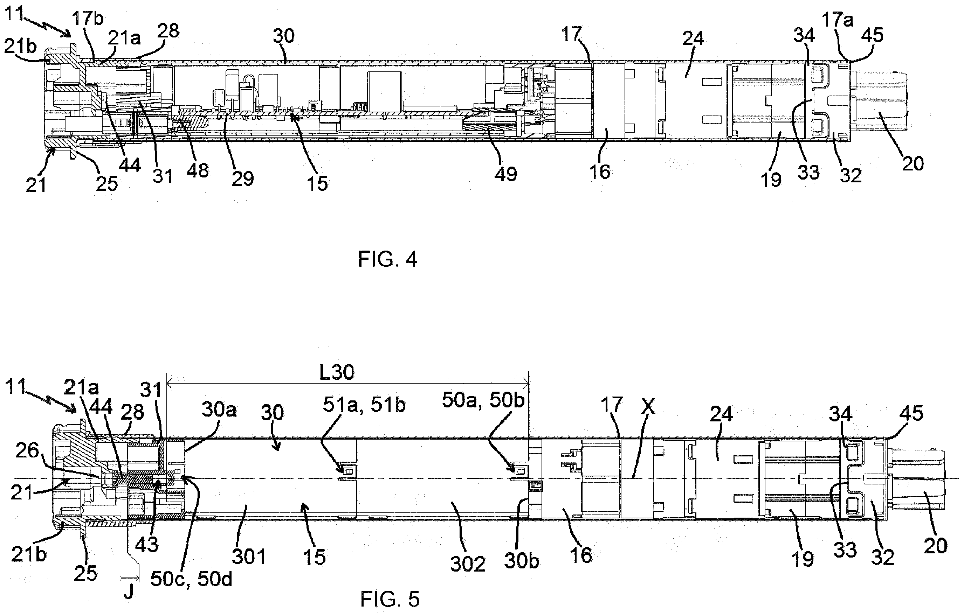

L'actionneur électromécanique 11 comprend également un élément d'interface 31, comme illustré aux figures 4 à 8 et 15 à 16. L'élément d'interface 31 est disposé entre l'élément d'obturation 21 et, plus particulièrement, la première partie 21a de l'élément d'obturation 21, et l'unité électronique de contrôle 15, suivant la direction de l'axe de rotation X.

Ici, l'élément d'interface 31 de l'actionneur électromécanique 11 fait partie intégrante de l'ensemble 27.

Ici, et tel qu'illustré aux figures 4 et 5, l'unité électronique de contrôle 15, le moteur électrique 16, le réducteur 19, l'élément d'interface 31 et le frein 24 sont disposés à l'intérieur du carter 17 de l'actionneur électromécanique 11.

Préférentiellement, les organes 31, 15, 16, 19, 24, 20 de l'ensemble 27 sont assemblés entre eux dans un ordre prédéterminé. L'ordre prédéterminé d'assemblage des organes 31, 15, 16, 19, 24, 20 de l'ensemble 27 comprend en premier lieu l'assemblage de l'élément d'interface 31 avec l'unité électronique de contrôle 15, puis l'assemblage de l'unité électronique de contrôle 15 avec le moteur électrique 16, puis l'assemblage du moteur électrique 16 avec le réducteur 19 et l'assemblage du réducteur 19 avec l'arbre de sortie 20.

Dans l'exemple de réalisation illustré aux figures 3 à 5 et 16, le frein 24 est disposé entre le moteur électrique 16 et le réducteur 19.

En variante, non représentée, le frein 24 est disposé entre le réducteur 19 et l'arbre de sortie 20.

Ici, chaque organe 31, 15, 16, 19, 24, 20 de l'ensemble 27 présente un axe qui est confondu avec l'axe de rotation X, dans la configuration assemblée de l'actionneur électromécanique 11. L'axe de chacun des organes 15, 16, 19, 24, 20 de l'ensemble 27 n'est pas représenté sur les figures 3 à 16, de sorte à simplifier la lecture de celles-ci.

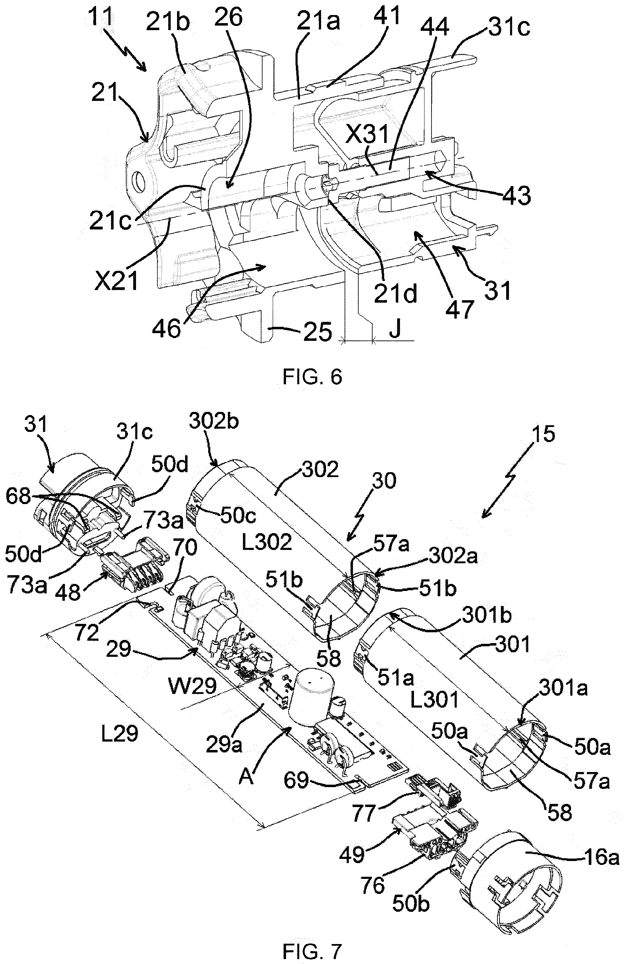

On décrit à présent, plus en détail et en référence aux figures 7 à 13, l'unité électronique de contrôle 15 appartenant à l'actionneur électromécanique 11 des figures 3 à 5.

L'unité électronique de contrôle 15 comprend un boîtier 30 et une carte électronique 29. La carte électronique 29 est disposée à l'intérieur du boîtier 30, dans une configuration assemblée de l'unité électronique de contrôle 15.

Ainsi, le boîtier 30 de l'unité électronique de contrôle 15 permet de protéger la carte électronique 29, lors de l'assemblage de l'actionneur électromécanique 11 et suite à l'assemblage de ce dernier, ainsi que d'assurer la rigidité de l'ensemble 27.

En outre, le boîtier 30 de l'unité électronique de contrôle 15 permet d'isoler électriquement la carte électronique 29 par rapport au carter 17.

Préférentiellement, le diamètre extérieur du boîtier 30 de l'unité électronique de contrôle 15 est inférieur au diamètre intérieur du carter 17 de l'actionneur électromécanique 11, de sorte que le boîtier 30 puisse être inséré dans le carter 17 de l'actionneur électromécanique 11, lors de l'assemblage de l'actionneur électromécanique 11.

Avantageusement, le boîtier 30 de l'unité électronique de contrôle 15 comprend au moins un tronçon 301, 302 réalisé sous la forme d'un tube creux.

Ainsi, l'obtention du boîtier 30 au moyen dudit au moins un tronçon 301, 302 réalisé sous la forme d'un tube creux permet de garantir la protection de la carte électronique 29, lors de l'assemblage de l'unité électronique de contrôle 15 à l'intérieur du carter 17 de l'actionneur électromécanique 11, en particulier d'éviter une déformation de la carte électronique 29.

Chaque tronçon 301, 302 du boîtier 30 est, préférentiellement, de forme cylindrique et, plus particulièrement, de section circulaire.

Ici, le boîtier 30 de l'unité électronique de contrôle 15 comprend un premier tronçon 301 réalisé sous la forme d'un premier tube creux et un deuxième tronçon 302 réalisé sous la forme d'un deuxième tube creux. Les tronçons 301, 302 sont configurés pour loger la carte électronique 29 de l'unité électronique de contrôle 15, dans la configuration assemblée de l'actionneur électromécanique 11.

En outre, le premier tronçon 301 du boîtier 30 comprend des premiers éléments de fixation 51a configurés pour coopérer avec des premiers éléments de fixation 51b du deuxième tronçon 302 du boîtier 30, dans la configuration assemblée de l'unité électronique de contrôle 15.

Ainsi, l'obtention du boîtier 30 au moyen des premier et deuxième tronçons 301, 302 réalisés sous la forme d'un tube creux permet d'adapter la longueur L30 du boîtier 30 en fonction de la longueur L29 de la carte électronique 29 au moyen d'au moins l'un des premier et deuxième tronçons 301, 302, tout en s'affranchissant de défauts de fabrication. Les longueurs L29, L30 sont mesurées parallèlement à l'axe de rotation X, dans la configuration assemblée de l'actionneur électromécanique 11.

Par ailleurs, les premiers éléments de fixation 51a, 51b des premier et deuxième tronçons 301, 302 du boîtier 30 permettent de solidariser en rotation et en translation ces premier et deuxième tronçons 301, 302 entre eux.

En outre, l'assemblage des premier et deuxième tronçons 301, 302 du boîtier 30 de l'unité électronique de contrôle 15 au moyen des premiers éléments de fixation 51a, 51b peut être mis en œuvre de manière automatique.

Par conséquent, le coût d'obtention du boîtier 30 de l'unité électronique de contrôle 15 est moins onéreux qu'un boîtier d'une unité électronique de contrôle comprenant deux demi-coques pour lequel un assemblage manuel est nécessaire, tel que celui décrit dans le document FR 2 983 368 A1.

Préférentiellement, les premiers éléments de fixation 51a, 51b des premier et deuxième tronçons 301, 302 du boîtier 30 sont des éléments de fixation par encliquetage élastique.

Ici, les premiers éléments de fixation 51a, 51b par encliquetage élastique des premier et deuxième tronçons 301, 302 du boîtier 30 sont réalisés au moyen de languettes et de pions.

En référence aux figures 5 et 16, chaque languette comprend une ouverture configurée pour coopérer avec un pion.

En variante et comme représenté aux figures 7, 8 et 13, chaque languette 51b est configurée pour coopérer avec deux pions d'un élément de fixation complémentaire 51a. Avantageusement, la languette 51b présente une forme en « T ». Autrement dit, la languette 51b comprend une première branche et une deuxième branche reliées l'une à l'autre. La deuxième branche est disposée de part et d'autre de la première branche. Ici, la deuxième branche est perpendiculaire à la première branche. En outre, chaque pion est configuré pour se loger au niveau d'un angle distinct formé par la première branche et la deuxième branche de la languette.

Ici, le premier tronçon 301 du boîtier 30 comprend une première extrémité 301a configurée pour coopérer avec le moteur électrique 16 et, en particulier un capot 16a du moteur électrique 16. Le premier tronçon 301 du boîtier 30 comprend également une deuxième extrémité 301b, opposée à la première extrémité 301a, configurée pour coopérer avec une première extrémité 302a du deuxième tronçon 302 du boîtier 30. En outre, le deuxième tronçon 302 du boîtier 30 comprend une deuxième extrémité 302b, opposée à la première extrémité 302a, configurée pour coopérer avec l'élément d'interface 31.

Avantageusement, le premier tronçon 301 du boîtier 30 comprend des deuxièmes éléments de fixation 50a configurés pour coopérer avec des premiers éléments de fixation 50b du moteur électrique 16, dans la configuration assemblée de l'actionneur électromécanique 11. En outre, le deuxième tronçon 302 du boîtier 30 comprend des deuxièmes éléments de fixation 50c configurés pour coopérer avec des premiers éléments de fixation 50d de l'élément d'interface 31, dans la configuration assemblée de l'actionneur électromécanique 11.

Ainsi, les premier et deuxième tronçons 301, 302 du boîtier 30 sont assemblés avec le moteur électrique 16 et l'élément d'interface 31, en particulier avant l'introduction de ces éléments 30, 16, 31 et, plus particulièrement, de l'ensemble 27 à l'intérieur du carter 17, de sorte à faciliter les opérations de manipulation et d'assemblage de l'actionneur électromécanique 11.

Préférentiellement, les deuxièmes éléments de fixation 50a, 50c des premier et deuxième tronçons 301, 302 du boîtier 30 et les premiers éléments de fixation 50b, 50d du moteur électrique 16 et de l'élément d'interface 31 sont des éléments de fixation par encliquetage élastique.

Ici, les deuxièmes éléments de fixation 50a, 50c des premier et deuxième tronçons 301, 302 du boîtier 30 et les premiers éléments de fixation 50b, 50d du moteur électrique 16 et de l'élément d'interface 31 par encliquetage élastique sont réalisés au moyen de languettes et de pions.

En référence aux figures 5 et 16, chaque languette 50a, 50d comprend une ouverture configurée pour coopérer avec un pion.

En variante et comme représenté aux figures 7, 8 et 13, chaque languette 50a, 50d est configurée pour coopérer avec deux pions. Avantageusement, la languette 50a, 50d présente une forme en « T ». Autrement dit, la languette 50a, 50d comprend une première branche et une deuxième branche reliée l'une à l'autre. La deuxième branche est disposée de part et d'autre de la première branche. Ici, la deuxième branche est perpendiculaire à la première branche. En outre, chaque pion est configuré pour se loger au niveau d'un angle distinct formé par la première branche et la deuxième branche de la languette.

Préférentiellement, les premier et deuxième tronçons 301, 302 du boîtier 30 sont dans une matière plastique. En outre, les premier et deuxième tronçons 301, 302 du boîtier 30 sont obtenus selon une technique d'injection de matière plastique.

Ainsi, la fabrication des premier et deuxième tronçons 301, 302 du boîtier 30, selon une technique d'injection de matière plastique, permet de garantir un niveau de conformité élevé des premier et deuxième tronçons 301, 302 et de réduire les intervalles de tolérance des cotes associées aux premier et deuxième tronçons 301, 302, de sorte à améliorer la précision de l'assemblage de l'unité électronique de contrôle 15, ainsi que de l'actionneur électromécanique 11.

En outre, la fabrication des premier et deuxième tronçons 301, 302 du boîtier 30, selon une technique d'injection de matière plastique, permet d'intégrer les premiers et deuxièmes éléments de fixation 50a, 51a, 51b, 50c aux premier et deuxième tronçons 301, 302.

Préférentiellement, les premier et deuxième tronçons 301, 302 du boîtier 30 comprennent respectivement les mêmes premiers et deuxièmes éléments de fixation 50a, 51a, 51b, 50c.

Ainsi, les premier et deuxième tronçons 301, 302 du boîtier 30 sont des éléments modulaires et peuvent être intervertis.

De cette manière, les premiers et deuxièmes éléments de fixation 50a, 51a, 51b, 50c de chacun des premier et deuxième tronçons 301, 302 du boîtier 30 sont identiques.

En outre, au moins l'un des premier et deuxième tronçons 301, 302 du boîtier 30 peut être ajouté ou retiré, lors de l'assemblage de l'unité électronique de contrôle 15, de sorte à adapter la longueur L30 du boîtier 30 de l'unité électronique de contrôle 15 en fonction de la longueur L29 de la carte électronique 29.

Ici, les premier et deuxième tronçons 301, 302 du boîtier 30 sont identiques et présentent des longueurs L301, L302 identiques.

Ainsi, un tel boîtier 30 réalisé au moyen de premier et deuxième tronçons 301, 302 identiques permet de réduire les coûts d'obtention de l'unité électronique de contrôle 15 et de simplifier l'industrialisation de l'actionneur électromécanique 11.

En variante, non représentée, les premier et deuxième tronçons 301, 302 du boîtier 30 présentent des longueurs L301, L302 différentes.

Préférentiellement, chacun des premier et deuxième tronçons 301, 302 du boîtier 30 comprend une première rainure 57a et une deuxième rainure 57b configurées pour maintenir en position la carte électronique 29 à l'intérieur du boîtier 30, dans la configuration assemblée de l'unité électronique de contrôle 15.

De cette manière, lors de l'assemblage de l'unité électronique de contrôle 15 et, en particulier, suite à l'assemblage des premier et deuxième tronçons 301, 302 du boîtier 30, la carte électronique 29 est insérée à l'intérieur du boîtier 30 par coulissement. Le coulissement de la carte électronique 29 à l'intérieur du boîtier 30 est mis en oeuvre par le guidage d'une plaquette de circuit imprimé 29a de la carte électronique 29 à l'intérieur des première et deuxième rainures 57a, 57b de chacun des premier et deuxième tronçons 301, 302 du boîtier 30.

Les premier et deuxième tronçons 301, 302 réalisés respectivement sous la forme d'un tube creux formant le boîtier 30 de l'unité électronique de contrôle 15 comprennent ainsi des éléments 57a, 57b de positionnement et de maintien de la carte électronique 29 simples et ne nécessitant pas une cotation fonctionnelle précise.

Par conséquent, le coût d'obtention du boîtier 30 de l'unité électronique de contrôle 15 est moins onéreux qu'un boîtier d'une unité électronique de contrôle comprenant deux demi-coques, tel que celui décrit dans le document FR 2 983 368 A1.

Par ailleurs, les premier et deuxième tronçons 301, 302 permettent de réaliser une entretoise par l'intermédiaire des première et deuxième rainures 57a, 57b, de sorte à isoler électriquement la carte électronique 29 par rapport au carter 17 de l'actionneur électromécanique 11.

En pratique, les première et deuxième rainures 57a, 57b sont ménagées respectivement au niveau d'une surface interne 58 de chacun des premier et deuxième tronçons 301, 302 du boîtier 30.

Avantageusement, la première rainure 57a est diamétralement opposée à la deuxième rainure 57b, pour chacun des premier et deuxième tronçons 301, 302 du boîtier 30.

Préférentiellement, dans une configuration assemblée des premier et deuxième tronçons 301, 302 du boîtier 30, la première rainure 57a du premier tronçon 301 est alignée avec la première rainure 57a du deuxième tronçon 302. En outre, la deuxième rainure 57b du premier tronçon 301 est alignée avec la deuxième rainure 57b du deuxième tronçon 302.

En variante, non représentée, le boîtier 30 de l'unité électronique de contrôle 15 comprend un unique tronçon réalisé sous la forme d'un tube creux. Le tronçon est configuré pour loger la carte électronique 29 de l'unité électronique de contrôle 15, dans la configuration assemblée de l'actionneur électromécanique 11.

Dans un tel cas, le tronçon du boîtier 30 comprend une première extrémité 301a configurée pour coopérer avec le moteur électrique 16 et, en particulier, le capot 16a du moteur électrique 16. Le tronçon du boîtier 30 comprend également une deuxième extrémité 301b, opposée à la première extrémité 301a, configurée pour coopérer avec l'élément d'interface 31.

Avantageusement, le tronçon du boîtier 30 comprend des premiers éléments de fixation 50a configurés pour coopérer avec des éléments de fixation 50b du moteur électrique 16, dans la configuration assemblée de l'actionneur électromécanique 11. En outre, le tronçon du boîtier 30 comprend des deuxièmes éléments de fixation 50c configurés pour coopérer avec des éléments de fixation 50d de l'élément d'interface 31, dans la configuration assemblée de l'actionneur électromécanique 11.

Ainsi, le tronçon du boîtier 30 est assemblé avec le moteur électrique 16 et l'élément d'interface 31, en particulier avant l'introduction de ces éléments 30, 16, 31 et, plus particulièrement, de l'ensemble 27 à l'intérieur du carter 17, de sorte à faciliter les opérations de manipulation et d'assemblage de l'actionneur électromécanique 11.

Préférentiellement, les éléments de fixation 50a, 50c du tronçon du boîtier 30 et les éléments de fixation 50b, 50d du moteur électrique 16 et de l'élément d'interface 31 sont des éléments de fixation par encliquetage élastique.

En variante, non représentée, le boîtier 30 de l'unité électronique de contrôle 15 comprend un nombre de tronçons réalisés sous la forme d'un tube creux supérieur ou égal à trois.

L'actionneur électromécanique 11 comprend un premier dispositif de connexion électrique 49. Le premier dispositif de connexion électrique 49 est configuré pour relier électriquement la carte électronique 29 de l'unité électronique de contrôle 15 au moteur électrique 16, dans la configuration assemblée de l'actionneur électromécanique 11.

Ici, le premier dispositif de connexion électrique 49 est associé au moteur électrique 16, dans la configuration assemblée de l'actionneur électromécanique 11.

Le premier dispositif de connexion électrique 49 comprend des premiers éléments de connexion électrique 60 configurés pour relier électriquement la carte électronique 29 de l'unité électronique de contrôle 15 à des éléments de connexion électrique 63 du moteur électrique 16, dans la configuration assemblée de l'actionneur électromécanique 11.

En outre, le premier dispositif de connexion électrique 49 comprend des deuxièmes éléments de connexion électrique 61 configurés pour relier électriquement la carte électronique 29 de l'unité électronique de contrôle 15 à des éléments de connexion électrique 64 d'une carte électronique additionnelle 65 du moteur électrique 16, dans la configuration assemblée de l'actionneur électromécanique 11.

Le premier dispositif de connexion électrique 49 est configuré, d'une part, pour s'enficher sur un premier bord de la plaquette de circuit imprimé 29a de la carte électronique 29 de l'unité électronique de contrôle 15 et, d'autre part, pour coopérer avec des pistes électriques de la carte électronique 29 de l'unité électronique de contrôle 15, en particulier par l'intermédiaire d'au moins les premiers et deuxièmes éléments de connexion électrique 60, 61 du premier dispositif de connexion électrique 49.

En outre, les premiers et deuxièmes éléments de connexion électrique 60, 61 du premier dispositif de connexion électrique 49 sont des éléments de connexion électrique configurés pour coopérer directement avec les éléments de connexion électrique 63, 64 respectifs du moteur électrique 16 et de la carte électronique additionnelle 65 du moteur électrique 16.

Ainsi, le premier dispositif de connexion électrique 49 permet de réaliser une liaison électrique à partir de la carte électronique 29 de l'unité électronique de contrôle 15, d'une part, vers le moteur électrique 16 et, d'autre part, vers la carte électronique additionnelle 65 du moteur électrique 16, sans utiliser des câbles électriques souples.

De cette manière, un tel assemblage de la carte électronique 29 de l'unité électronique de contrôle 15 avec le moteur électrique 16 au moyen du premier dispositif de connexion électrique 49 est simplifié, tout en minimisant les coûts d'obtention de l'actionneur électromécanique 11 et en s'affranchissant de défauts de fabrication de l'actionneur électromécanique 11.

En outre, le premier dispositif de connexion électrique 49 facilite l'assemblage de l'actionneur électromécanique 11 et, en particulier, de l'unité électronique de contrôle 15 avec le moteur électrique 16 sur une ligne de production automatisée.

Avantageusement, la carte électronique additionnelle 65 du moteur électrique 16 est disposée à l'intérieur du capot 16a du moteur électrique 16, en particulier disposée entre une paroi du capot 16a et un corps du moteur électrique 16, suivant la direction de l'axe de rotation X.

Avantageusement, la carte électronique additionnelle 65 du moteur électrique 16 est disposée de manière perpendiculaire à la carte électronique 29 de l'unité électronique de contrôle 15, dans la configuration assemblée de l'actionneur électromécanique 11.

Ainsi, la carte électronique additionnelle 65 du moteur électrique 16 s'étend suivant un plan B perpendiculaire à un plan A passant par la carte électronique 29 de l'unité électronique de contrôle 15, dans la configuration assemblée de l'actionneur électromécanique 11.

Avantageusement, la carte électronique additionnelle 65 du moteur électrique 16 permet de contrôler la position du rotor du moteur électrique 16. Une telle détermination de la position du rotor du moteur électrique 16 peut être mise en oeuvre soit au moyen de capteurs pouvant être, par exemple, deux capteurs à effet Hall disposés sur la carte électronique additionnelle 65, soit au moyen d'un dispositif de détermination d'une grandeur physique, en particulier le courant électrique traversant le moteur électrique 16 lors de son fonctionnement.

Le nombre de capteurs de la carte électronique additionnelle du moteur électrique n'est pas limitatif et peut être différent, en particulier égal à un ou encore supérieur ou égal à trois.

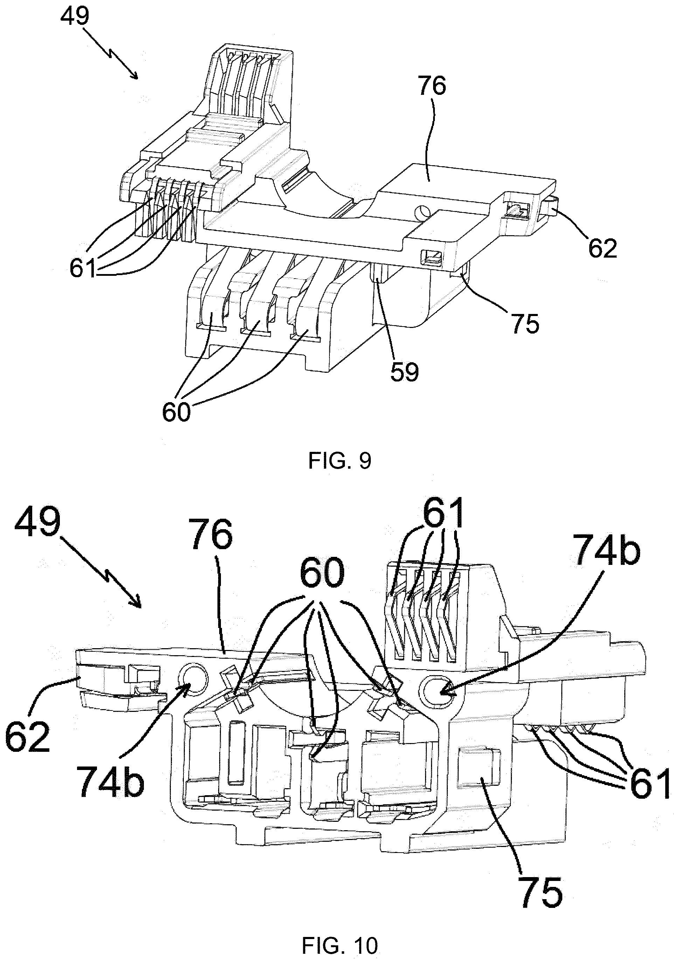

Avantageusement, les premiers et deuxièmes éléments de connexion électrique 60, 61 du premier dispositif de connexion électrique 49, configurés pour coopérer avec la plaquette de circuit imprimé 29a de la carte électronique 29 de l'unité électronique de contrôle 15, sont des lamelles souples, comme illustré à la figure 9.

Avantageusement, les premiers éléments de connexion électrique 60 du premier dispositif de connexion électrique 49, configurés pour coopérer avec les éléments de connexion électrique 63 du moteur électrique 16, sont des éléments de connexion électrique enfichables, en particulier en forme de pinces, comme illustré à la figure 10.

En outre, les deuxièmes éléments de connexion électrique 61 du premier dispositif de connexion électrique 49, configurés pour coopérer avec les éléments de connexion électrique 64 de la carte électronique additionnelle 65 du moteur électrique 16, sont des lamelles souples, comme illustré aux figures 9 et 10.

Dans cet exemple de réalisation, les premiers éléments de connexion électrique 60 du premier dispositif de connexion électrique 49 sont au nombre de trois, puisque le moteur électrique 16 est de type triphasé et câblé en triangle.

Le nombre de premiers éléments de connexion électrique du premier dispositif de connexion électrique n'est pas limitatif et peut être différent, en particulier en fonction du type de moteur électrique et de son câblage électrique.

En outre, les deuxièmes éléments de connexion électrique 61 du premier dispositif de connexion électrique 49 sont au nombre de quatre, puisque deux de ces deuxièmes éléments de connexion électrique 61 sont configurés pour alimenter en énergie électrique les capteurs et deux autres de ces deuxièmes éléments de connexion électrique 61 sont configurés pour transmettre des signaux, à partir des capteurs, vers la carte électronique 29 de l'unité électronique de contrôle 15.

Le nombre de deuxièmes éléments de connexion électrique du premier dispositif de connexion électrique n'est pas limitatif et peut être différent.

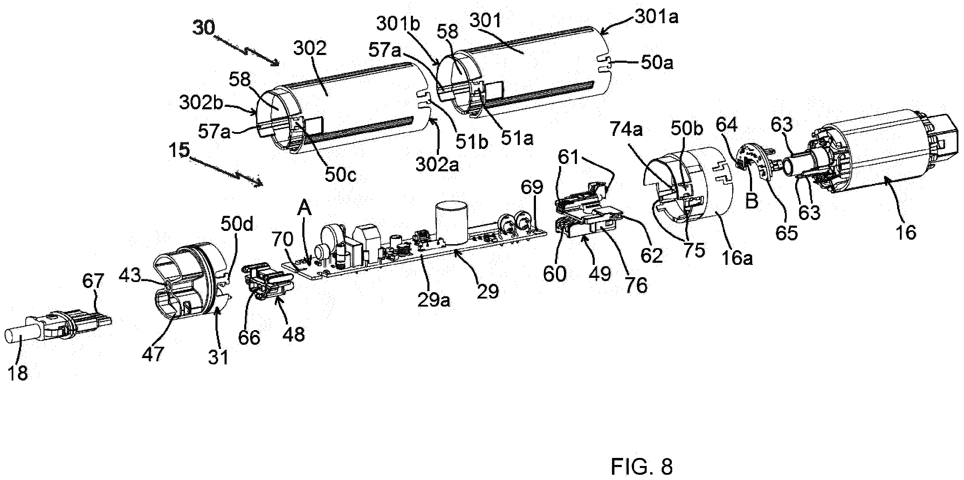

Avantageusement, le premier dispositif de connexion électrique 49 est positionné, par rapport au capot 16a du moteur électrique 16, au moyen d'éléments de guidage 74a, 74b, comme illustré aux figures 8 et 10.

Ainsi, lors de l'assemblage de l'actionneur électromécanique 11, le premier dispositif de connexion électrique 49 est positionné par rapport au capot 16a du moteur électrique 16 au moyen des éléments de guidage 74a, 74b.

Ici, les éléments de guidage 74a, 74b comprennent des pions 74a, dont un seul est visible à la figure 8, ménagés dans le capot 16a du moteur électrique 16 et des trous 74b ménagés dans le boîtier 76 du premier dispositif de connexion électrique 49.

Avantageusement, le premier dispositif de connexion électrique 49 est maintenu en position par rapport au capot 16a du moteur électrique 16 au moyen d'éléments de fixation 75.

Ainsi, le maintien en position du premier dispositif de connexion électrique 49 par rapport au capot 16a du moteur électrique 16 permet de limiter l'usure des éléments de connexion électrique 60, 61 du premier dispositif de connexion électrique 49 et des éléments de connexion électrique 63 du moteur électrique 16, ainsi que des éléments de connexion électrique 64 de la carte électronique additionnelle 65 du moteur électrique 16.

De cette manière, le jeu fonctionnel entre le premier dispositif de connexion électrique 49 et le capot 16a du moteur électrique 16 est minimisé.

Ici, les éléments de fixation 75 du premier dispositif de connexion électrique 49 par rapport au capot 16a du moteur électrique 16 sont des éléments de fixation par encliquetage élastique.

Avantageusement, la plaquette de circuit imprimé 29a de la carte électronique 29 de l'unité électronique de contrôle 15 comprend une première fente 69. En outre, le premier dispositif de connexion électrique 49 comprend une nervure 59. La première fente 69 de la plaquette de circuit imprimé 29a est configurée pour recevoir la nervure 59 du premier dispositif de connexion électrique 49.

Ainsi, la première fente 69 de la plaquette de circuit imprimé 29a permet de minimiser le jeu fonctionnel latéral du premier dispositif de connexion électrique 49 par rapport à la largeur W29 de la plaquette de circuit imprimé 29a.

De cette manière, les premiers et deuxièmes éléments de connexion électriques 60, 61 du premier dispositif de connexion électrique 49 sont positionnés par rapport à des pistes électriques de la plaquette de circuit imprimé 29a, dans la configuration assemblée de l'unité électronique de contrôle 15.

En outre, un tel positionnement du premier dispositif de connexion électrique 49 par rapport à la plaquette de circuit imprimé 29a permet d'éviter un décalage des premiers et deuxièmes éléments de connexion électriques 60, 61 du premier dispositif de connexion électrique 49 par rapport aux pistes électriques de la plaquette de circuit imprimé 29a, de sorte à éviter un court-circuit électrique.

Par ailleurs, un tel assemblage de la plaquette de circuit imprimé 29a et du premier dispositif de connexion électrique 49 permet de s'affranchir des tolérances d'assemblage de l'unité électronique de contrôle 15 avec le moteur électrique 16 et, plus particulièrement, avec le capot 16a du moteur électrique 16.

Avantageusement, la nervure 59 du premier dispositif de connexion électrique 49 est configurée pour être insérée dans la première fente 69 de la plaquette de circuit imprimé 29a avec un ajustement serré.

Préférentiellement, le premier dispositif de connexion électrique 49 comprend également un troisième élément de connexion électrique 62 configuré pour relier électriquement la carte électronique 29 de l'unité électronique de contrôle 15 au carter 17 de l'actionneur électromécanique 11.

Ainsi, le troisième élément de connexion électrique 62 est intégré au premier dispositif de connexion électrique 49, de sorte à réaliser une liaison électrique entre le carter 17 de l'actionneur électromécanique 11 et la carte électronique 29 de l'unité électronique de contrôle 15.

De cette manière, la conception et l'assemblage de l'unité électronique de contrôle 15 et, plus généralement, de l'actionneur électromécanique 11 sont simplifiés.

Avantageusement, le troisième élément de connexion électrique 62 du premier dispositif de connexion électrique 49 est configuré pour réaliser une liaison électrique entre le carter 17 de l'actionneur électromécanique 11 et la carte électronique 29 de l'unité électronique de contrôle 15, de sorte à s'affranchir de parasites au niveau de la carte électronique 29 de l'unité électronique de contrôle 15.

Avantageusement, le troisième élément de connexion électrique 62 du premier dispositif de connexion électrique 49 est configuré pour réaliser une liaison électrique entre le carter 17 de l'actionneur électromécanique 11 et la carte électronique 29 de l'unité électronique de contrôle 15, de sorte à évacuer des charges électrostatiques au moyen d'un dispositif de décharge de charges électrostatiques, non représenté.

Ainsi, le troisième élément de connexion électrique 62 du premier dispositif de connexion électrique 49 permet de simplifier le respect des contraintes de distance dans l'air et des lignes de fuite imposées par les normes de sécurité et/ou par des critères de robustesse liés à la décharge de charges électrostatiques.

En outre, le dispositif de décharge de charges électrostatiques permet d'évacuer des charges électrostatiques accumulées dans l'écran 2 du dispositif d'occultation 3 de l'installation domotique 1.

Dans un tel cas, le dispositif de décharge de charges électrostatiques peut être réalisé au moyen d'un éclateur ménagé au niveau de la plaquette de circuit imprimé 29a.

Avantageusement, l'éclateur comprend une première et une deuxième électrodes formées respectivement par une première piste conductrice et par une deuxième piste conductrice de la plaquette de circuit imprimé 29a de l'unité électronique de contrôle 15. La première électrode est reliée électriquement au carter 17 de l'actionneur électromécanique 11. En outre, la deuxième électrode est reliée électriquement à un des conducteurs électriques d'alimentation en énergie électrique du moteur électrique 16.

Ainsi, l'évacuation de charges électrostatiques au travers de l'éclateur ménagé au niveau de la plaquette de circuit imprimé 29a de l'unité électronique de contrôle 15 permet de créer un chemin préférentiel de décharge entre le carter 17 de l'actionneur électromécanique 11 et l'un des conducteurs électriques d'alimentation en énergie électrique du moteur électrique 16 de l'actionneur électromécanique 11.

De cette manière, l'évacuation de charges électrostatiques au travers de l'éclateur ménagé au niveau de la plaquette de circuit imprimé 29a permet d'éviter des dysfonctionnements et/ou des endommagements de l'actionneur électromécanique 11 et, en particulier, d'empêcher la destruction de composants électroniques montés sur la plaquette de circuit imprimé 29a.

De cette manière, l'éclateur ménagé au niveau de la plaquette de circuit imprimé 29a permet de protéger l'unité électronique de contrôle 15 de l'actionneur électromécanique 11.

Avantageusement, le câble d'alimentation électrique 18 de l'actionneur électromécanique 11 comprend une pluralité de conducteurs électriques. Les conducteurs électriques d'alimentation en énergie électrique du moteur électrique 16 sont reliés électriquement aux conducteurs électriques du câble d'alimentation électrique 18.

Les conducteurs électriques d'alimentation en énergie électrique du moteur électrique 16 sont réalisés au moyen de pistes électriques de la plaquette de circuit imprimé 29a reliant électriquement cette dernière au câble d'alimentation électrique 18.

En pratique, les conducteurs électriques du câble d'alimentation électrique 18 sont reliés électriquement aux conducteurs électriques d'un réseau d'alimentation en énergie électrique du secteur.

Ici, le réseau d'alimentation en énergie électrique du secteur, le câble d'alimentation électrique 18 de l'actionneur électromécanique 11, ainsi que les conducteurs électriques comprennent au moins un conducteur électrique de neutre et au moins un conducteur de phase.

Dans un tel cas, l'actionneur électromécanique 11 est alimenté en énergie électrique par le réseau d'alimentation électrique du secteur, en particulier par le réseau alternatif commercial.

La tension du réseau d'alimentation électrique ou tension secteur présente, par exemple, une valeur de 230 VRMS (valeur de crête de 325V) pour le réseau électrique français et une fréquence de 50 Hz.

La tension secteur peut présenter des valeurs différentes, en fonction du réseau électrique du pays dans lequel on se situe.

Avantageusement, le carter 17 de l'actionneur électromécanique 11 est relié électriquement à une masse de référence, en particulier le 0 volt de la plaquette de circuit imprimé 29a de l'unité électronique de contrôle 15.

Avantageusement, dans un tel cas, le carter 17 est réalisé dans un matériau électriquement conducteur, notamment métallique.

Préférentiellement, le troisième élément de connexion électrique 62 est disposé au niveau d'une extrémité du premier dispositif de connexion électrique 49.

Ainsi, un tel positionnement du troisième élément de connexion électrique 62 par rapport au premier dispositif de connexion électrique 49 permet de simplifier la forme du boîtier 30 de l'unité électronique de contrôle 15.

Le premier dispositif de connexion électrique 49 comprend l'ensemble des éléments de connexion électrique 60, 61, 62 configurés pour coopérer avec le moteur électrique 16, la carte électronique additionnelle 65 du moteur électrique et, éventuellement, avec le carter 17 de l'actionneur électromécanique 11.

En référence à la figure 7, le premier dispositif de connexion électrique 49 comprend un premier boîtier 76 et un deuxième boîtier 77. Le deuxième boîtier 77 est configuré pour être assemblé sur le premier boîtier 76. Le premier boîtier 76 comporte au moins les premiers éléments de connexion électrique 60. En outre, le deuxième boîtier 77 comporte au moins les deuxièmes éléments de connexion électrique 61.

Ici, le premier boîtier 76 comporte également les troisièmes éléments de connexion électrique 62.

Ainsi, l'assemblage de l'unité électronique de contrôle 15 avec le moteur électrique 16 au moyen des éléments de fixation 50a, 50b et l'assemblage du deuxième boîtier 77 sur le premier boîtier 76 du premier dispositif de connexion électrique 49 permet de former une liaison électrique de la carte électronique 29 de l'unité électronique de contrôle 15 vers la carte électronique additionnelle 65 du moteur électrique 16 au moyen du premier dispositif de connexion électrique 49 sans câbles électriques souples.

De cette manière, cette liaison électrique est mise en oeuvre uniquement au moyen du premier dispositif de connexion électrique 49 enfiché sur un bord de la plaquette de circuit imprimé 29a de la carte électronique 29 et relié électriquement à la carte électronique additionnelle 65 du moteur électrique 16.

Dans cet exemple de réalisation, le deuxième boîtier 77 est configuré pour être fixé sur le premier boîtier 76 du premier dispositif de connexion électrique 49 au moyen d'éléments de fixation, dans une configuration assemblée du premier dispositif de connexion électrique 49.

Ici, les éléments de fixation du deuxième boîtier 77 avec le premier boîtier 76 du premier dispositif de connexion électrique 49 sont des éléments de fixation enfichables, en particulier une nervure configurée pour coulisser à l'intérieur d'une rainure.

En référence aux figures 8 à 10, le premier dispositif de connexion électrique 49 comprend un unique boîtier 76. En outre, le boîtier 76 comporte au moins les premiers et deuxièmes éléments de connexion électrique 60, 61.

Ici, le boîtier 76 comporte également les troisièmes éléments de connexion électrique 62.

Avantageusement, l'actionneur électromécanique 11 comprend un deuxième dispositif de connexion électrique 48 configuré pour relier électriquement la carte électronique 29 de l'unité électronique de contrôle 15 au câble d'alimentation électrique 18, dans la configuration assemblée de l'actionneur électromécanique 11.

Ici, le deuxième dispositif de connexion électrique 48 est associé à l'élément d'interface 31.

Dans cet exemple de réalisation, le câble d'alimentation électrique 18 s'étend en partie au travers de l'élément d'obturation 21.

Avantageusement, l'élément d'interface 31 est configuré pour coopérer, d'une part, avec le deuxième dispositif de connexion électrique 48 et, d'autre part, avec le câble d'alimentation électrique 18.

Le deuxième dispositif de connexion électrique 48 comprend des éléments de connexion électrique 66 configurés pour relier électriquement la carte électronique 29 de l'unité électronique de contrôle 15 à des éléments de connexion électrique 67 du câble d'alimentation électrique 18, dans la configuration assemblée de l'actionneur électromécanique 11.

Avantageusement, le deuxième dispositif de connexion électrique 48 est configuré, d'une part, pour s'enficher sur un deuxième bord de la plaquette de circuit imprimé 29a de la carte électronique 29 de l'unité électronique de contrôle 15 et, d'autre part, pour coopérer avec des pistes électriques de cette carte électronique 29, en particulier par l'intermédiaire d'au moins les éléments de connexion électrique 66 du deuxième dispositif de connexion électrique 48.

En outre, les éléments de connexion électrique 66 du deuxième dispositif de connexion électrique 48 sont des éléments de connexion électrique configurés pour coopérer directement avec les éléments de connexion électrique 67 du câble d'alimentation électrique 18.

Ainsi, le deuxième dispositif de connexion électrique 48 permet de réaliser une liaison électrique à partir de la carte électronique 29 de l'unité électronique de contrôle 15 vers le câble d'alimentation électrique 18, sans utiliser des câbles électriques souples.

De cette manière, un tel assemblage de la carte électronique 29 de l'unité électronique de contrôle 15 avec le câble d'alimentation électrique 18 au moyen du deuxième dispositif de connexion électrique 48 est simplifié, tout en minimisant les coûts d'obtention de l'actionneur électromécanique 11 et en s'affranchissant de défauts de fabrication de l'actionneur électromécanique 11.

En outre, le deuxième dispositif de connexion électrique 48 facilite l'assemblage de l'actionneur électromécanique 11 sur une ligne de production automatisée.

Ici, le premier bord de la plaquette de circuit imprimé 29a de la carte électronique 29 de l'unité électronique de contrôle 15 configuré pour coopérer avec le premier dispositif de connexion électrique 49 est différent du deuxième bord de la plaquette de circuit imprimé 29a de la carte électronique 29 de l'unité électronique de contrôle 15 configuré pour coopérer avec le deuxième dispositif de connexion électrique 48.

Dans cet exemple de réalisation, le premier bord de la plaquette de circuit imprimé 29a est opposé au deuxième bord de la plaquette de circuit imprimé 29a.

En variante, non représentée, le premier bord de la plaquette de circuit imprimé 29a est le même que le deuxième bord de la plaquette de circuit imprimé 29a.

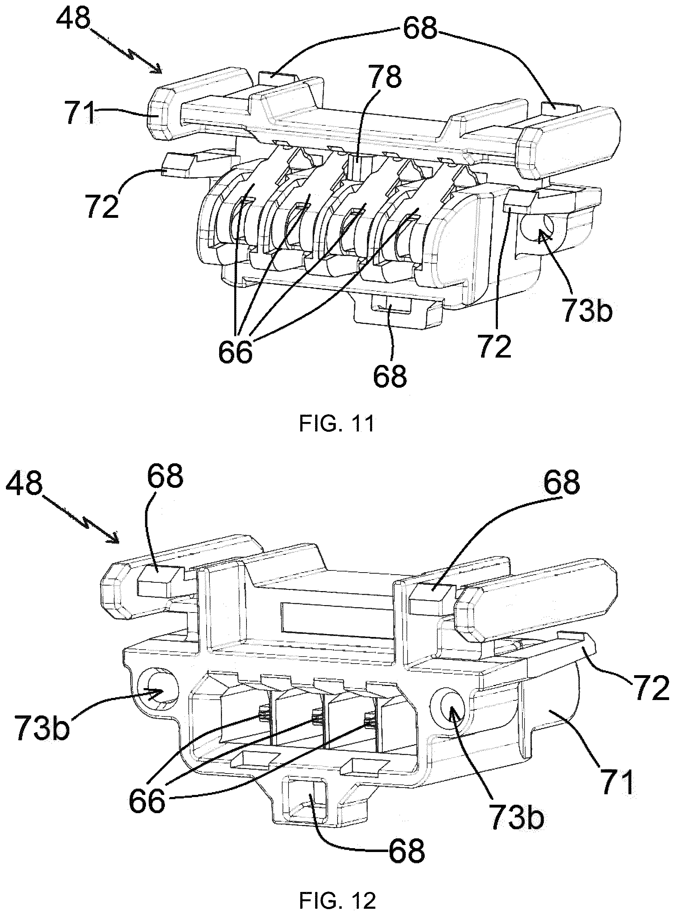

Ici, les éléments de connexion électrique 66 du deuxième dispositif de connexion électrique 48 configurés pour coopérer avec la plaquette de circuit imprimé 29a de la carte électronique 29 de l'unité électronique de contrôle 15 sont des lamelles souples, comme illustré à la figure 11.

En outre, les éléments de connexion électrique 66 du deuxième dispositif de connexion électrique 48 configurés pour coopérer avec les éléments de connexion électrique 67 du câble d'alimentation électrique 18 sont des éléments de connexion électrique enfichables, comme illustré aux figures 8 et 12.

Avantageusement, le deuxième dispositif de connexion électrique 48 est positionné par rapport à l'élément d'interface 31 au moyen d'éléments de guidage 73a, 73b, comme illustré aux figures 7, 11 et 12.

Ainsi, lors de l'assemblage de l'actionneur électromécanique 11, le deuxième dispositif de connexion électrique 48 est positionné par rapport à l'élément d'interface 31 au moyen des éléments de guidage 73a, 73b.

Ici, les éléments de guidage 73a, 73b comprennent des pions 73a ménagés dans l'élément d'interface 31 et des trous 73b ménagés dans le boîtier 71 du deuxième dispositif de connexion électrique 48.

Avantageusement, le deuxième dispositif de connexion électrique 48 est maintenu en position par rapport à l'élément d'interface 31 au moyen d'éléments de fixation 68, comme illustré aux figures 7, 11 et 12.

Ainsi, le maintien en position du deuxième dispositif de connexion électrique 48 par rapport à l'élément d'interface 31 permet de limiter l'usure des éléments de connexion électrique 66 du deuxième dispositif de connexion électrique 48 et des éléments de connexion électrique 67 du câble d'alimentation électrique 18.

De cette manière, le jeu fonctionnel entre le deuxième dispositif de connexion électrique 48 et l'élément d'interface 31 est minimisé.

Ici, les éléments de fixation 68 du deuxième dispositif de connexion électrique 48 par rapport à l'élément d'interface 31 sont des éléments de fixation par encliquetage élastique.

Avantageusement, le deuxième dispositif de connexion électrique 48 est maintenu en position par rapport à la plaquette de circuit imprimé 29a de la carte électronique 29 de l'unité électronique de contrôle 15 au moyen d'éléments de fixation 72, comme illustré aux figures 7, 11 et 12.

Ainsi, le maintien en position du deuxième dispositif de connexion électrique 48 par rapport à la plaquette de circuit imprimé 29a permet de limiter l'usure des éléments de connexion électrique 66 du deuxième dispositif de connexion électrique 48 et des pistes électriques de la carte électronique 29.

De cette manière, le jeu fonctionnel entre le deuxième dispositif de connexion électrique 48 et la plaquette de circuit imprimé 29a est minimisé.

Ici, les éléments de fixation 72 du deuxième dispositif de connexion électrique 48 par rapport à la plaquette de circuit imprimé 29a sont des éléments de fixation par encliquetage élastique.

Avantageusement, la plaquette de circuit imprimé 29a de la carte électronique 29 de l'unité électronique de contrôle 15 comprend une deuxième fente 70. En outre, le deuxième dispositif de connexion électrique 48 comprend une nervure 78. La deuxième fente 70 de la plaquette de circuit imprimé 29a est configurée pour recevoir la nervure 78 du deuxième dispositif de connexion électrique 48.

Ainsi, la deuxième fente 70 de la plaquette de circuit imprimé 29a de la carte électronique 29 de l'unité électronique de contrôle 15 permet de minimiser le jeu fonctionnel latéral du deuxième dispositif de connexion électrique 48 par rapport à la largeur W29 de la plaquette de circuit imprimé 29a.

De cette manière, les éléments de connexion électriques 66 du deuxième dispositif de connexion électrique 48 sont positionnés par rapport à des pistes électriques de la plaquette de circuit imprimé 29a, dans la configuration assemblée de l'unité électronique de contrôle 15.

En outre, un tel positionnement du deuxième dispositif de connexion électrique 48 par rapport à la plaquette de circuit imprimé 29a permet d'éviter un décalage des éléments de connexion électriques 66 du deuxième dispositif de connexion électrique 48 par rapport aux pistes électriques de la plaquette de circuit imprimé 29a, de sorte à éviter un court-circuit électrique.

Par ailleurs, un tel assemblage de la plaquette de circuit imprimé 29a et du deuxième dispositif de connexion électrique 48 permet de s'affranchir des tolérances d'assemblage de l'unité électronique de contrôle 15 avec l'élément d'interface 31.

Avantageusement, la nervure 78 du deuxième dispositif de connexion électrique 48 est configurée pour être insérée dans la deuxième fente 70 de la plaquette de circuit imprimé 29a avec un ajustement serré.

Ici, le deuxième dispositif de connexion électrique 48 comprend un unique boîtier 71. En outre, le boîtier 71 comporte au moins les éléments de connexion électrique 66.

Avantageusement, l'assemblage de l'unité électronique de contrôle 15 avec le moteur électrique 16 et l'élément d'interface 31 au moyen des éléments de fixation 50a, 50b, 50c, 50d et l'assemblage des premier et deuxième dispositifs de connexion électrique 48, 49 sur la plaquette de circuit imprimé 29a de la carte électronique 29 permettent de former une liaison électrique de la carte électronique 29 vers le moteur électrique 16 au moyen du premier dispositif de connexion électrique 49 et de former une liaison électrique de la carte électronique 29 vers l'élément d'interface 31 au moyen du deuxième dispositif de connexion électrique 48, sans utiliser des câbles électriques souples.

De cette manière, ces liaisons électriques sont mises en oeuvre uniquement au moyen des premier et deuxième dispositifs de connexion électrique 48, 49 enfichés respectivement sur un bord de la plaquette de circuit imprimé 29a de la carte électronique 29 de l'unité électronique de contrôle 15.

Le positionnement et le maintien en position des premier et deuxième dispositifs de connexion électrique 48, 49 respectivement sur un bord de la plaquette de circuit imprimé 29a permettent de simplifier l'assemblage de l'unité électronique de contrôle 15.

En outre, le câble d'alimentation électrique 18, la carte électronique 29 de l'unité électronique de contrôle 15, le moteur électrique 16 et la carte électronique additionnelle 65 du moteur électrique 16 sont reliés électriquement au moyen des premier et deuxième dispositifs de connexion électrique 48, 49, sans utiliser des câbles électriques souples.

De cette manière, le processus d'assemblage de l'actionneur électromécanique 11 est simplifié et le respect de la conformité des contraintes normatives est facilité.

Par ailleurs, un tel assemblage de l'unité électronique de contrôle 15 avec le câble d'alimentation électrique 18 et le moteur électrique 16 au moyen des premier et deuxième dispositifs de connexion électrique 48, 49 facilite l'automatisation de l'assemblage de l'actionneur électromécanique 11.

On décrit à présent, en référence aux figures 3 à 16, les différents organes de l'actionneur électromécanique 11 appartenant à l'installation domotique des figures 1 et 2.

Avantageusement, le moteur électrique 16 présente un corps 16c, comme illustré à la figure 16. En outre, le corps 16c du moteur électrique 16 est, préférentiellement, de forme cylindrique et, plus particulièrement, de section circulaire.

Préférentiellement, le diamètre extérieur du corps 16c du moteur électrique 16 est inférieur au diamètre intérieur du carter 17 de l'actionneur électromécanique 11, de sorte que le corps 16c du moteur électrique 16 puisse être inséré dans le carter 17 de l'actionneur électromécanique 11, lors de l'assemblage de l'actionneur électromécanique 11.

Avantageusement, le réducteur 19 présente un corps 19c, comme illustré à la figure 16. En outre, le corps 19c du réducteur 19 est, préférentiellement, de forme cylindrique et, plus particulièrement, de section circulaire.

Préférentiellement, le diamètre extérieur du corps 19c du réducteur 19 est inférieur au diamètre intérieur du carter 17 de l'actionneur électromécanique 11, de sorte que le corps 19c du réducteur 19 puisse être inséré dans le carter 17 de l'actionneur électromécanique 11, lors de l'assemblage de l'actionneur électromécanique 11.

Avantageusement, l'élément d'interface 31 présente un corps 31c, comme illustré aux figures 6 et 16. En outre, le corps 31c de l'élément d'interface 31 est, préférentiellement, de forme cylindrique et, plus particulièrement, de section circulaire.

Préférentiellement, le diamètre extérieur du corps 31c de l'élément d'interface 31 est inférieur au diamètre intérieur du carter 17 de l'actionneur électromécanique 11, de sorte que le corps 31c de l'élément d'interface 31 puisse être inséré dans le carter 17 de l'actionneur électromécanique 11, lors de l'assemblage de l'actionneur électromécanique 11.

Avantageusement, le frein 24 présente un corps 24c, comme illustré à la figure 16. En outre, le corps 24c du frein 24 est, préférentiellement, de forme cylindrique et, plus particulièrement, de section circulaire.

Préférentiellement, le diamètre extérieur du corps 24c du frein 24 est inférieur au diamètre intérieur du carter 17 de l'actionneur électromécanique 11, de sorte que le corps 24c du frein 24 puisse être inséré dans le carter 17 de l'actionneur électromécanique 11, lors de l'assemblage de l'actionneur électromécanique 11.

Avantageusement, le corps 31c de l'élément d'interface 31, les premier et deuxième tronçons 301, 302 du boîtier 30 de l'unité électronique de contrôle 15, le corps 16c du moteur électrique 16, le corps 19c du réducteur 19 et, éventuellement, le corps 24c du frein 24 sont assemblés entre eux au moyen d'éléments de fixation 50a, 50b, 50c, 50d, 51a, 51b, en particulier par encliquetage élastique, de sorte à former l'ensemble 27.

Ainsi, les éléments de fixation 50a, 50b, 50c, 50d, 51a, 51b des différents organes 31, 15, 16, 19, 24 de l'ensemble 27 permettent de solidariser en rotation et en translation ces organes 31, 15, 16, 19, 24 entre eux.

De cette manière, suite à la fixation des organes 31, 15, 16, 19, 24 de l'ensemble 27 l'un par rapport à l'autre, les liaisons entre les organes 31, 15, 16, 19, 24 de l'ensemble 27 sont sans débattement axial, hormis les tolérances d'assemblage des organes 31, 15, 16, 19, 24 l'un par rapport à l'autre.

En outre, l'assemblage des différents organes 31, 15, 16, 19, 24 de l'ensemble 27 au moyen des éléments de fixation 50a, 50b, 50c, 50d, 51a, 51b permet de pouvoir introduire, en une seule opération, l'ensemble 27 dans le carter 17, suivant un mouvement de translation.

Ici, les éléments de fixation 50a, 50b, 50c, 50d, 51a, 51b par encliquetage élastique sont réalisés au moyen de languettes et de pions.

Ici, l'un des organes de l'ensemble 27 est assemblé à un autre des organes de l'ensemble 27 au moyen des éléments de fixation 50a, 50b, 50c, 50d, 51a, 51b par encliquetage élastique, pouvant être au nombre de quatre et décalés angulairement d'un angle de 90° autour de l'axe de rotation X.

Le nombre et la position angulaire des éléments de fixation par encliquetage élastique entre deux des organes de l'ensemble ne sont pas limitatifs et peuvent être différents, en particulier, ces éléments de fixation peuvent être au nombre de trois et décalés angulairement d'un angle de 120° autour de l'axe de rotation.

Préférentiellement, le diamètre extérieur, respectivement, du corps 31c de l'élément d'interface 31, du boîtier 30 de l'unité électronique de contrôle 15, du corps 16c du moteur électrique 16, du corps 19c du réducteur 19 et du corps 24c du frein 24 présente une même valeur.

Avantageusement, l'actionneur électromécanique 11 comprend également un élément de maintien 32. L'élément de maintien 32 est assemblé au niveau de la première extrémité 17a du carter 17. L'élément de maintien 32 comprend une première butée 33 configurée pour coopérer avec l'ensemble 27 et, plus particulièrement, avec le réducteur 19, dans la configuration assemblée de l'actionneur électromécanique 11.

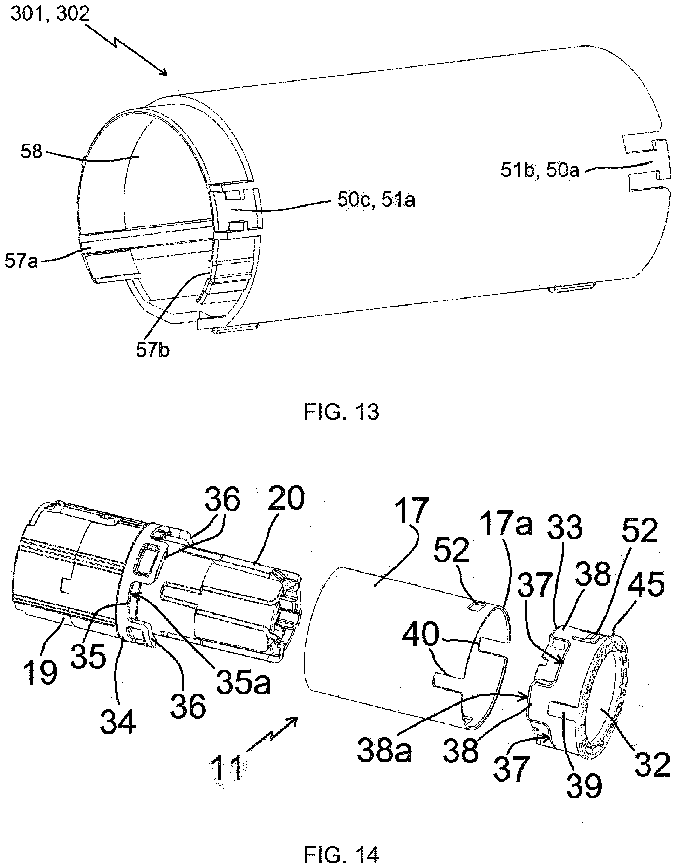

Dans l'exemple de réalisation illustré aux figures 4, 5, 14 et 16, l'ensemble 27 et, plus particulièrement, le réducteur 19 comprend un embout 34 configuré pour coopérer avec l'élément de maintien 32, au niveau de la première extrémité 17a du carter 17, dans la configuration assemblée de l'actionneur électromécanique 11. Sur la figure 14, seule une partie du carter 17 est représentée, à proximité de son extrémité 17a.

Ici, l'embout 34 comprend des encoches 35 et des languettes 36, disposées alternativement autour de l'axe de rotation X, configurées pour coopérer, respectivement, avec des languettes 38 et des encoches 37 de l'élément de maintien 32.

Ainsi, les languettes 38 de l'élément de maintien 32 sont configurées pour s'engager dans les encoches 35 de l'embout 34, dans la configuration assemblée de l'actionneur électromécanique 11. En outre, les languettes 36 de l'embout 34 sont configurées pour s'engager dans les encoches 37 de l'élément de maintien 32, dans la configuration assemblée de l'actionneur électromécanique 11.

Dans un tel cas, la première butée 33 de l'élément de maintien 32 configurée pour coopérer avec l'ensemble 27 et, plus particulièrement, avec le réducteur 19, dans la configuration assemblée de l'actionneur électromécanique 11, est réalisée par une paroi d'extrémité 38a de chacune des languettes 38, ces parois d'extrémité 38a venant en appui contre des parois de fond 35a de chacune des encoches 35 de l'embout 34.

Ici, l'embout 34 comprend quatre encoches 35 décalées angulairement d'un angle de 90°, autour de l'axe de rotation X, et quatre languettes 36 décalées angulairement d'un angle de 90°, autour de l'axe de rotation X. En outre, l'élément de maintien 32 comprend quatre encoches 37 décalées angulairement d'un angle de 90°, autour de l'axe de rotation X, et quatre languettes 38 décalées angulairement d'un angle de 90°, autour de l'axe de rotation X.

Le nombre et la position angulaire des encoches et des languettes de l'embout et de l'élément de maintien ne sont pas limitatifs et peuvent être différents, en particulier, ces encoches et languettes peuvent être au nombre de trois et décalées angulairement d'un angle de 120° autour de l'axe de rotation.

En outre, l'élément de maintien 32 comprend des crans 39, chacun en forme de saillie radiale, configurés pour coopérer avec des premières échancrures 40 du carter 17. Les premières échancrures 40 sont ménagées au niveau de la première extrémité 17a du carter 17.

Ici, l'élément de maintien 32 comprend deux crans 39 diamétralement opposés par rapport à l'axe de rotation X. En outre, le carter 17 comprend deux premières échancrures 40 diamétralement opposées par rapport à l'axe de rotation X.

De cette manière, un tel assemblage de l'embout 34, de l'élément de maintien 32 et du carter 17 permet de bloquer en rotation l'ensemble 27 par rapport au carter 17 et, plus particulièrement, le réducteur 19 par rapport au carter 17.

Avantageusement, l'élément de maintien 32 comprend une deuxième butée 45 configurée pour coopérer avec le carter 17, au niveau de la première extrémité 17a du carter 17, dans la configuration assemblée de l'actionneur électromécanique 11.

Ainsi, la deuxième butée 45 de l'élément de maintien 32 permet de limiter l'enfoncement de l'élément de maintien 32 dans le carter 17.

Ici, la deuxième butée 45 de l'élément de maintien 32 est réalisée sous la forme d'une collerette, en particulier de forme cylindrique et plane, perpendiculaire à l'axe de rotation X, dans la configuration assemblée de l'actionneur électromécanique 11.

Par ailleurs, l'élément de maintien 32 et le carter 17 sont également assemblés entre eux au moyen d'éléments de fixation 52, en particulier par encliquetage élastique.

Ainsi, l'assemblage de l'élément de maintien 32 avec le carter 17 permet de bloquer en translation l'élément de maintien 32 et, plus particulièrement, l'ensemble 27 par rapport au carter 17 et, plus particulièrement, par rapport à la première extrémité 17a du carter 17.

De cette manière, suite à la fixation de l'élément de maintien 32 par rapport au carter 17, l'élément de maintien 32 sert de butée pour l'ensemble 27, lors du coulissement de l'ensemble 27 à l'intérieur du carter 17, suivant la direction axiale de l'actionneur électromécanique 11, à partir de la deuxième extrémité 17b du carter 17 vers la première extrémité 17a du carter 17.

Par ailleurs, l'élément d'obturation 21 et, plus particulièrement, la première partie 21a de l'élément d'obturation 21 comprend des crans 41, chacun en forme de saillie radiale, configurés pour coopérer avec des deuxièmes échancrures 42 du carter 17. Les deuxièmes échancrures 42 sont ménagées au niveau de la deuxième extrémité 17b du carter 17.

Ici, la première partie 21a de l'élément d'obturation 21 comprend deux crans 41 diamétralement opposés par rapport à l'axe de rotation X. En outre, le carter 17 comprend deux deuxièmes échancrures 42 diamétralement opposées par rapport à l'axe de rotation X.

De cette manière, un tel assemblage de l'élément d'obturation 21 et du carter 17 permet de bloquer en rotation l'élément d'obturation 21 par rapport au carter 17.

Par ailleurs, l'élément d'obturation 21 et le carter 17 sont également assemblés entre eux au moyen d'éléments de fixation 53, en particulier par vissage.

De cette manière, l'assemblage de l'élément d'obturation 21 avec le carter 17 permet de bloquer en translation l'élément d'obturation 21 par rapport au carter 17 et, plus particulièrement, par rapport à la deuxième extrémité 17b du carter 17.

Ici, la fixation de l'élément d'obturation 21 avec le carter 17 est mise en oeuvre au moyen de vis de fixation 53, pouvant être, par exemple, de type auto-taraudeuse. Dans la configuration assemblée de l'actionneur électromécanique 11, les vis de fixation 53 traversent des trous de passage 54 ménagés dans le carter 17 et sont vissées dans des trous de fixation 55 de l'élément d'obturation 21. En outre, les vis de fixation 53 traversent des trous de passage 56 ménagés dans la couronne 28.

En variante, non représentée, les éléments de fixation de l'élément d'obturation 21 avec le carter 17 peuvent être des rivets ou des éléments de fixation par encliquetage élastique.

Un tel assemblage de l'actionneur électromécanique 11 permet de prévoir un jeu J, en particulier axial, entre l'élément d'obturation 21 et l'élément d'interface 31, suivant la direction axiale de l'actionneur électromécanique 11, comme illustré aux figures 5 et 6.

Le jeu J permet de garantir l'assemblage de l'élément d'obturation 21 par rapport au carter 17.

Ici et de manière nullement limitative, le jeu J entre l'élément d'obturation 21 et l'élément d'interface 31, suivant la direction axiale de l'actionneur électromécanique 11, peut être de l'ordre de plus ou moins deux millimètres.

Avantageusement, l'élément d'interface 31 comprend un premier logement 43 à l'intérieur duquel est disposé un élément d'inhibition 44 du jeu J entre l'élément d'obturation 21 et l'élément d'interface 31, suivant la direction axiale de l'actionneur électromécanique 11.

Ainsi, l'élément d'inhibition 44 du jeu J entre l'élément d'obturation 21 et l'élément d'interface 31, suivant la direction axiale de l'actionneur électromécanique 11, permet d'améliorer la tenue des organes 31, 15, 16, 19, 24, 20 de l'actionneur électromécanique 11 disposés à l'intérieur du carter 17 et de s'affranchir du risque de déconnexion électrique de l'unité électronique de contrôle 15 par rapport au câble d'alimentation électrique 18 et par rapport au moteur électrique 16, notamment lors d'un choc de l'actionneur électromécanique 11, pouvant intervenir lors d'une manipulation ou du transport de l'actionneur électromécanique 11, ou lors d'un fonctionnement anormal de l'actionneur électromécanique 11.

De cette manière, une telle construction de l'actionneur électromécanique 11 permet d'inhiber le jeu J entre l'élément d'obturation 21 et l'élément d'interface 31, suivant la direction axiale de l'actionneur électromécanique 11, suite à l'assemblage de l'actionneur électromécanique 11, de sorte à garantir un état fonctionnel de l'actionneur électromécanique 11, au cours des différentes phases de vie de l'actionneur électromécanique 11.

En outre, l'élément d'inhibition 44 permet de bloquer en translation l'élément d'interface 31 par rapport à l'élément d'obturation 21.

Ici, le premier logement 43 de l'élément d'interface 31 est de forme générale cylindrique, centré sur un axe longitudinal X31 de l'élément d'interface 31.

Par ailleurs, l'axe longitudinal X31 de l'élément d'interface 31 est confondu avec l'axe de rotation X du moteur électrique 16 de l'actionneur électromécanique 11, ou encore l'axe de rotation du tube d'enroulement 4, en configuration montée du dispositif d'entraînement motorisé 5.

Préférentiellement, l'élément d'obturation 21 comprend un premier logement 26 débouchant au niveau d'une première face 21c de l'élément d'obturation 21 et au niveau d'une deuxième face 21d de l'élément d'obturation 21.

Le premier logement 26 de l'élément d'obturation 21 est disposé en vis-à-vis de l'élément d'inhibition 44, dans la configuration assemblée de l'actionneur électromécanique 11, de sorte à permettre un ajustement en position de l'élément d'inhibition 44 à partir de l'extérieur de l'élément d'obturation 21.

Ainsi, le réglage en position de l'élément d'inhibition 44 par rapport à l'élément d'interface 31 et à l'élément d'obturation 21, suivant la direction axiale de l'actionneur électromécanique 11, peut être mis en oeuvre à partir de l'extérieur de l'élément d'obturation 21 et, plus particulièrement, de l'actionneur électromécanique 11, en manœuvrant l'élément d'inhibition 44 au moyen d'un outil, non représenté, tel qu'un tournevis, qui traverse le premier logement 26 de l'élément d'obturation 21, comme expliqué ci-après.

De cette manière, le positionnement de l'élément d'inhibition 44 par rapport à l'élément d'interface 31 et à l'élément d'obturation 21, suivant la direction axiale de l'actionneur électromécanique 11, peut être mis en œuvre en fonction de la valeur du jeu J, sans avoir à démonter un ou plusieurs éléments de l'actionneur électromécanique 11.

Ici, le premier logement 26 de l'élément d'obturation 21 est de forme générale cylindrique, centré sur un axe longitudinal X21 de l'élément d'obturation 21.

Par ailleurs, l'axe longitudinal X21 de l'élément d'obturation 21 est confondu avec l'axe de rotation X du moteur électrique 16 de l'actionneur électromécanique 11, ou encore l'axe de rotation du tube d'enroulement 4, en configuration montée du dispositif d'entraînement motorisé 5. En outre, l'axe longitudinal X21 de l'élément d'obturation 21 est confondu avec l'axe longitudinal X31 de l'élément d'interface 31, dans la configuration assemblée de l'actionneur électromécanique 11.

Avantageusement, l'élément d'inhibition 44 est configuré pour coopérer avec une face de l'élément d'obturation 21 et, plus particulièrement, la deuxième face 21d de l'élément d'obturation 21, suite à un ajustement en position de l'élément d'inhibition 44 par rapport à l'élément d'obturation 21, suivant la direction axiale de l'actionneur électromécanique 11, de sorte à inhiber le jeu J entre l'élément d'obturation 21 et l'élément d'interface 31.

Ainsi, l'inhibition du jeu J entre l'élément d'obturation 21 et l'élément d'interface 31 est mis en œuvre par le réglage en position de l'élément d'inhibition 44 par rapport à l'élément d'interface 31 et à l'élément d'obturation 21, suivant la direction axiale de l'actionneur électromécanique 11 et, plus particulièrement, la mise en appui de l'élément d'inhibition 44 contre la deuxième face 21d de l'élément d'obturation 21.

Préférentiellement, l'élément d'inhibition 44 est une vis. En outre, le premier logement 43 de l'élément d'interface 31 est un alésage.

Ici, l'élément d'inhibition 44 est une vis présentant un filetage métrique. En outre, le premier logement 43 de l'élément d'interface 31 est un alésage taraudé.

En variante, non représentée, l'élément d'inhibition 44 est une vis auto-taraudeuse. Dans ce cas, le premier logement 43 de l'élément d'interface 31 est un alésage lisse.

Dans un exemple de réalisation, la vis formant l'élément d'inhibition 44 est une vis identique aux vis formant les éléments de fixation 53 de l'élément d'obturation 21 avec le carter 17.

Ainsi, le nombre de modèles de vis pour la fabrication de l'actionneur électromécanique 11 est limité, de sorte à simplifier l'industrialisation et à éviter des risques d'erreur de référence.

En pratique, une tête de la vis formant l'élément d'inhibition 44 est configurée pour coopérer avec la deuxième face 21d de l'élément d'obturation 21, suite à un dévissage de la vis 44 par rapport à l'alésage 43 de l'élément d'interface 31, de sorte à inhiber le jeu J entre l'élément d'obturation 21 et l'élément d'interface 31.

Avantageusement, le premier logement 26 ménagé dans l'élément d'obturation 21 permet le passage d'un outil, en particulier d'un tournevis, de sorte à atteindre l'élément d'inhibition 44 et, plus particulièrement, permettre le dévissage de la vis formant l'élément d'inhibition 44.

Préférentiellement, l'élément d'inhibition 44 est assemblé sur l'élément d'interface 31 avant l'introduction de l'ensemble 27 à l'intérieur du carter 17.

Ainsi, l'opération d'assemblage de l'élément d'inhibition 44 sur l'élément d'interface 31 n'engendre pas un allongement du temps d'assemblage de l'ensemble 27 à l'intérieur du carter 17, puisque cette opération peut être mise en œuvre en temps masqué, au cours de la fabrication de l'actionneur électromécanique 11.

Ici, la vis 44 est vissée à l'intérieur du premier logement 43 de l'élément d'interface 31 avant l'introduction de l'ensemble 27 à l'intérieur du carter 17, en particulier jusqu'à la mise en appui de la tête de la vis 44 contre le rebord du premier logement 43 de l'élément d'interface 31.

Avantageusement, l'élément d'obturation 21 comprend un deuxième logement 46. Le deuxième logement 46 de l'élément d'obturation 21 est configuré pour permettre le passage du câble d'alimentation électrique 18.

En outre, l'élément d'interface 31 comprend un deuxième logement 47. Le deuxième logement 47 de l'élément d'interface 31 comprend en partie le deuxième dispositif de connexion électrique 48. Le deuxième dispositif de connexion électrique 48 ménagé dans le deuxième logement 47 de l'élément d'interface 31 est configuré pour coopérer avec les éléments de connexion électrique 67 du câble d'alimentation électrique 18.

Par ailleurs, le deuxième dispositif de connexion électrique 48 est relié électriquement à l'unité électronique de contrôle 15, au moyen d'éléments de connexion électrique 66 configurés pour coopérer avec des pistes de la carte électronique 29 de l'unité électronique de contrôle 15.

Ainsi, les éléments de connexion électrique 67 du câble d'alimentation électrique 18 sont configurés pour coopérer avec les éléments de connexion électrique 66 du deuxième dispositif de connexion électrique 48, de sorte à alimenter en énergie électrique le moteur électrique 16, au moyen du câble d'alimentation électrique 18.

Dans un exemple de réalisation, non représenté, le deuxième logement 46 de l'élément d'obturation 21 est également configuré pour permettre le passage d'un câble d'échange de données.

Dans ce cas, l'élément d'interface 31 comprend un troisième logement. Le troisième logement de l'élément d'interface 31 comprend un connecteur électrique. Ce connecteur électrique ménagé dans le troisième logement de l'élément d'interface 31 est configuré pour coopérer avec un connecteur électrique du câble d'échange de données.

Par ailleurs, toujours dans ce cas, ce connecteur électrique de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Dans un tel cas où l'actionneur électromécanique 11 est relié au câble d'échange de données, celui-ci permet à l'unité électronique de contrôle 15 de recevoir et/ou d'émettre des données avec une unité de commande, en particulier avec l'unité de commande locale 12 et/ou l'unité de commande centrale 13, par une liaison filaire.

Ainsi, le connecteur électrique du câble d'échange de données est configuré pour coopérer avec ce connecteur électrique de l'élément d'interface 31, de sorte à échanger des données entre au moins l'une des unités de commande 12, 13 et l'unité électronique de contrôle 15.

Grâce à la présente invention, le premier dispositif de connexion électrique permet de réaliser une liaison électrique à partir de la carte électronique de l'unité électronique de contrôle, d'une part, vers le moteur électrique et, d'autre part, vers la carte électronique additionnelle du moteur électrique, sans utiliser des câbles électriques souples.

De cette manière, un tel assemblage de la carte électronique de l'unité électronique de contrôle avec le moteur électrique au moyen du premier dispositif de connexion électrique est simplifié, tout en minimisant les coûts d'obtention de l'actionneur électromécanique et en s'affranchissant de défauts de fabrication de l'actionneur électromécanique.

De nombreuses modifications peuvent être apportées aux exemples de réalisation décrits précédemment sans sortir du cadre de l'invention.

En variante, non représentée, le deuxième dispositif de connexion électrique 48 comprend le troisième élément de connexion électrique 62 configuré pour relier électriquement la carte électronique 29 de l'unité électronique de contrôle 15 au carter 17 de l'actionneur électromécanique 11.

En variante, non représentée, le capot 16a du moteur électrique 16 comprend le troisième élément de connexion électrique 62 configuré pour relier électriquement la carte électronique 29 de l'unité électronique de contrôle 15 au carter 17 de l'actionneur électromécanique 11.

En outre, les modes de réalisation et variantes envisagés peuvent être combinés pour générer de nouveaux modes de réalisation de l'invention, sans sortir du cadre de l'invention comme défini par les revendications suivantes.

## Revendications

1. Actionneur électromécanique tubulaire (11) pour une installation domotique de fermeture ou de protection solaire, l'actionneur électromécanique (11) comprenant au moins :
- un moteur électrique (16),
- un réducteur (19),
- une unité électronique de contrôle (15), l'unité électronique de contrôle (15) comprenant un boîtier (30) et une carte électronique (29), la carte électronique (29) étant disposée à l'intérieur du boîtier (30), dans une configuration assemblée de l'unité électronique de contrôle (15),
- un premier dispositif de connexion électrique (49), le premier dispositif de connexion électrique (49) étant configuré pour relier électriquement la carte électronique (29) de l'unité électronique de contrôle (15) au moteur électrique (16), dans une configuration assemblée de l'actionneur électromécanique (11), et
- un carter (17), le carter (17) étant creux et configuré pour loger au moins l'unité électronique de contrôle (15), le moteur électrique (16) et le réducteur (19),
**caractérisé en ce que** le premier dispositif de connexion électrique (49) comprend au moins :
- des premiers éléments de connexion électrique (60) configurés pour relier électriquement la carte électronique (29) de l'unité électronique de contrôle (15) à des éléments de connexion électrique (63) du moteur électrique (16), dans la configuration assemblée de l'actionneur électromécanique (11), et
- des deuxièmes éléments de connexion électrique (61) configurés pour relier électriquement la carte électronique (29) de l'unité électronique de contrôle (15) à des éléments de connexion électrique (64) d'une carte électronique additionnelle (65) du moteur électrique (16), dans la configuration assemblée de l'actionneur électromécanique (11),
**en ce que** le premier dispositif de connexion électrique (49) est configuré, d'une part, pour s'enficher sur un bord d'une plaquette de circuit imprimé (29a) de la carte électronique (29) de l'unité électronique de contrôle (15) et, d'autre part, pour coopérer avec des pistes électriques de la carte électronique (29) de l'unité électronique de contrôle (15),
et **en ce que** les premiers et deuxièmes éléments de connexion électrique (60, 61) du premier dispositif de connexion électrique (49) sont des éléments de connexion électrique configurés pour coopérer directement avec les éléments de connexion électrique (63, 64) respectifs du moteur électrique (16) et de la carte électronique additionnelle (65) du moteur électrique (16).

2. Actionneur électromécanique tubulaire (11) pour une installation domotique de fermeture ou de protection solaire selon la revendication 1, **caractérisé en ce que** le premier dispositif de connexion électrique (49) comprend un unique boîtier (76) et **en ce que** le boîtier (76) comporte au moins les premiers et deuxièmes éléments de connexion électrique (60, 61) du premier dispositif de connexion électrique (49).

3. Actionneur électromécanique tubulaire (11) pour une installation domotique de fermeture ou de protection solaire selon la revendication 1, **caractérisé en ce que** :
- le premier dispositif de connexion électrique (49) comprend un premier boîtier (76) et un deuxième boîtier (77), le deuxième boîtier (77) étant configuré pour être assemblé sur le premier boîtier (76),
- le premier boîtier (76) comporte au moins les premiers éléments de connexion électrique (60) du premier dispositif de connexion électrique (49), et
- le deuxième boîtier (77) comporte au moins les deuxièmes éléments de connexion électrique (61) du premier dispositif de connexion électrique (49).

4. Actionneur électromécanique tubulaire (11) pour une installation domotique de fermeture ou de protection solaire selon l'une quelconque des revendications 1 à 3, **caractérisé en ce que** le premier dispositif de connexion électrique (49) comprend également un troisième élément de connexion électrique (62) configuré pour relier électriquement la carte électronique (29) de l'unité électronique de contrôle (15) au carter (17) de l'actionneur électromécanique (11).

5. Actionneur électromécanique tubulaire (11) pour une installation domotique de fermeture ou de protection solaire selon la revendication 4, **caractérisé en ce que** le troisième élément de connexion électrique (62) du premier dispositif de connexion électrique (49) est configuré pour réaliser une liaison électrique entre le carter (17) de l'actionneur électromécanique (11) et la carte électronique (29) de l'unité électronique de contrôle (15), de sorte à évacuer des charges électrostatiques au moyen d'un dispositif de décharge de charges électrostatiques.

6. Actionneur électromécanique tubulaire (11) pour une installation domotique de fermeture ou de protection solaire selon la revendication 4 ou la revendication 5, **caractérisé en ce que** le carter (17) de l'actionneur électromécanique (11) est réalisé dans un matériau électriquement conducteur.

7. Actionneur électromécanique tubulaire (11) pour une installation domotique de fermeture ou de protection solaire selon l'une quelconque des revendications 1 à 6, **caractérisé en ce que** le boîtier (30) de l'unité électronique de contrôle (15) comprend au moins un tronçon (301, 302) réalisé sous la forme d'un tube creux, le tronçon (301, 302) est configuré pour loger la carte électronique (29) de l'unité électronique de contrôle (15), dans la configuration assemblée de l'actionneur électromécanique (11).

8. Actionneur électromécanique tubulaire (11) pour une installation domotique de fermeture ou de protection solaire selon l'une quelconque des revendications 1 à 7, **caractérisé en ce que** l'actionneur électromécanique (11) comprend un deuxième dispositif de connexion électrique (48) configuré pour relier électriquement la carte électronique (29) de l'unité électronique de contrôle (15) à un câble d'alimentation électrique (18), dans la configuration assemblée de l'actionneur électromécanique (11).

9. Actionneur électromécanique tubulaire (11) pour une installation domotique de fermeture ou de protection solaire selon la revendication 8, **caractérisé en ce que** l'actionneur électromécanique (11) comprend également :
- un élément d'obturation (21), l'élément d'obturation (21) étant configuré pour obturer une extrémité (17b) du carter (17),
- un élément d'interface (31), l'élément d'interface (31) étant disposé entre l'élément d'obturation (21) et l'unité électronique de contrôle (15),
et **en ce que** l'élément d'interface (31) est configuré pour coopérer, d'une part, avec le deuxième dispositif de connexion électrique (48) et, d'autre part, avec le câble d'alimentation électrique (18).

10. Installation domotique de fermeture ou de protection solaire comprenant un écran (2) enroulable sur un tube d'enroulement (4) entraîné en rotation par un actionneur électromécanique tubulaire (11), **caractérisée en ce que** l'actionneur électromécanique tubulaire (11) est conforme à l'une quelconque des revendications 1 à 9.

## Patentansprüche

1. Rohrförmige elektromechanische Stellvorrichtung (11) für eine gebäudetechnische Verschluss- oder Sonnenschutzanlage, wobei die elektromechanische Stellvorrichtung (11) mindestens umfasst:
- einen Elektromotor (16),
- ein Getriebe (19),
- eine elektronische Steuereinheit (15), wobei die elektronische Steuereinheit (15) ein Gehäuse (30) und eine Elektronikplatine (29) umfasst, wobei die Elektronikplatine (29) in einer zusammengebauten Konfiguration der elektronischen Steuereinheit (15) innerhalb des Gehäuses (30) angeordnet ist,
- eine erste elektrische Verbindungsvorrichtung (49), wobei die erste elektrische Verbindungsvorrichtung (49) ausgebildet ist, die Elektronikplatine (29) der elektronischen Steuereinheit (15) mit dem Elektromotor (16) in einer zusammengebauten Konfiguration der elektromechanischen Stellvorrichtung (11) elektrisch zu verbinden, und
- ein Gehäuse (17), wobei das Gehäuse (17) hohl ist und ausgebildet ist, zumindest die elektronische Steuereinheit (15), den Elektromotor (16) und das Getriebe (19) aufzunehmen,
**dadurch gekennzeichnet, dass** die erste elektrische Verbindungsvorrichtung (49) mindestens umfasst:
- erste elektrische Verbindungselemente (60), die ausgebildet sind, die Elektronikplatine (29) der elektronischen Steuereinheit (15) mit elektrischen Verbindungselementen (63) des Elektromotors (16) in der zusammengebauten Konfiguration der elektromechanischen Stellvorrichtung (11) elektrisch zu verbinden, und
- zweite elektrische Verbindungselemente (61), die ausgebildet sind, die Elektronikplatine (29) der elektronischen Steuereinheit (15) mit elektrischen Verbindungselementen (64) einer zusätzlichen Elektronikplatine (65) des Elektromotors (16) in der zusammengebauten Konfiguration der elektromechanischen Stellvorrichtung (11) elektrisch zu verbinden,
dass die erste elektrische Verbindungsvorrichtung (49) einerseits zum Aufstecken auf einen Rand einer gedruckten Schaltkreisplatte (29a) der Elektronikplatine (29) der elektronischen Steuereinheit (15) und andererseits zum Zusammenwirken mit elektrischen Leiterbahnen der Elektronikplatine (29) der elektronischen Steuereinheit (15) ausgebildet ist,
und dass die ersten und zweiten elektrischen Verbindungselemente (60, 61) der ersten elektrischen Verbindungsvorrichtung (49) elektrische Verbindungselemente sind, die ausgebildet sind, direkt mit den jeweiligen elektrischen Verbindungselementen (63, 64) des Elektromotors (16) und der zusätzlichen Elektronikplatine (65) des Elektromotors (16) zusammenzuwirken.

2. Rohrförmige elektromechanische Stellvorrichtung (11) für eine gebäudetechnische Verschluss- oder Sonnenschutzanlage nach Anspruch 1, **dadurch gekennzeichnet, dass** die erste elektrische Verbindungsvorrichtung (49) ein einziges Gehäuse (76) umfasst und dass das Gehäuse (76) zumindest die ersten und zweiten elektrischen Verbindungselemente (60, 61) der ersten elektrischen Verbindungsvorrichtung (49) umfasst.

3. Rohrförmige elektromechanische Stellvorrichtung (11) für eine gebäudetechnische Verschluss- oder Sonnenschutzanlage nach Anspruch 1, **dadurch gekennzeichnet, dass**
- die erste elektrische Verbindungsvorrichtung (49) ein erstes Gehäuse (76) und ein zweites Gehäuse (77) umfasst, wobei das zweite Gehäuse (77) ausgebildet ist, mit dem ersten Gehäuse (76) zusammengebaut zu werden,
- das erste Gehäuse (76) zumindest die ersten elektrischen Verbindungselemente (60) der ersten elektrischen Verbindungsvorrichtung (49) aufweist, und
- das zweite Gehäuse (77) zumindest die zweiten elektrischen Verbindungselemente (61) der ersten elektrischen Verbindungsvorrichtung (49) aufweist.

4. Rohrförmige elektromechanische Stellvorrichtung (11) für eine gebäudetechnische Verschluss- oder Sonnenschutzanlage nach einem beliebigen der Ansprüche 1 bis 3, **dadurch gekennzeichnet, dass** die erste elektrische Verbindungsvorrichtung (49) auch ein drittes elektrisches Verbindungselement (62) umfasst, das ausgebildet ist, die Elektronikplatine (29) der elektronischen Steuereinheit (15) mit dem Gehäuse (17) der elektromechanischen Stellvorrichtung (11) elektrisch zu verbinden.

5. Rohrförmige elektromechanische Stellvorrichtung (11) für eine gebäudetechnische Verschluss- oder Sonnenschutzanlage nach Anspruch 4, **dadurch gekennzeichnet, dass** das dritte elektrische Verbindungselement (62) der ersten elektrischen Verbindungsvorrichtung (49) ausgebildet ist, eine elektrische Verbindung zwischen dem Gehäuse (17) der elektromechanischen Stellvorrichtung (11) und der Elektronikplatine (29) der elektronischen Steuereinheit (15) herzustellen, um elektrostatische Ladungen mittels einer elektrostatischen Entladevorrichtung für elektrostatische Ladungen abzuleiten.

6. Rohrförmige elektromechanische Stellvorrichtung (11) für eine gebäudetechnische Verschluss- oder Sonnenschutzanlage nach Anspruch 4 oder Anspruch 5, **dadurch gekennzeichnet, dass** das Gehäuse (17) der elektromechanischen Stellvorrichtung (11) aus einem elektrisch leitfähigen Material hergestellt ist.

7. Rohrförmige elektromechanische Stellvorrichtung (11) für eine gebäudetechnische Verschluss- oder Sonnenschutzanlage nach einem beliebigen der Ansprüche 1 bis 6, **dadurch gekennzeichnet, dass** das Gehäuse (30) der elektronischen Steuereinheit (15) mindestens einen Abschnitt (301, 302) in Form eines hohlen Rohrs umfasst, wobei der Abschnitt (301, 302) ausgebildet ist, in der zusammengebauten Konfiguration der elektromechanischen Stellvorrichtung (11) die Elektronikplatine (29) der elektronischen Steuereinheit (15) aufzunehmen.

8. Rohrförmige elektromechanische Stellvorrichtung (11) für eine gebäudetechnische Verschluss- oder Sonnenschutzanlage nach einem beliebigen der Ansprüche 1 bis 7, **dadurch gekennzeichnet, dass** die elektromechanische Stellvorrichtung (11) eine zweite elektrische Verbindungsvorrichtung (48) umfasst, die ausgebildet ist, die Elektronikplatine (29) der elektronischen Steuereinheit (15) mit einem elektrischen Versorgungskabel (18) in der zusammengebauten Konfiguration der elektromechanischen Stellvorrichtung (11) elektrisch zu verbinden.

9. Rohrförmige elektromechanische Stellvorrichtung (11) für eine gebäudetechnische Verschluss- oder Sonnenschutzanlage nach Anspruch 8, **dadurch gekennzeichnet, dass** die elektromechanische Stellvorrichtung (11) auch umfasst:
- ein Verschlusselement (21), wobei das Verschlusselement (21) zum Verschließen eines Endes (17b) des Gehäuses (17) ausgebildet ist,
- ein Zwischenelement (31), wobei das Zwischenelement (31) zwischen dem Verschlusselement (21) und der elektronischen Steuereinheit (15) angeordnet ist,
und dass das Zwischenelement (31) ausgebildet ist, einerseits mit der zweiten elektrischen Verbindungsvorrichtung (48) und andererseits mit dem elektrischen Versorgungskabel (18) zusammenzuwirken.

10. Gebäudetechnische Verschluss- oder Sonnenschutzanlage mit einem Schirm (2), der auf ein Wickelrohr (4) aufrollbar ist, das von einer rohrförmigen elektromechanischen Stellvorrichtung (11) in Drehung versetzt wird, **dadurch gekennzeichnet, dass** die rohrförmige elektromechanische Stellvorrichtung (11) nach einem beliebigen der Ansprüche 1 bis 9 ausgeführt ist.

## Claims

1. A tubular electromechanical actuator (11) for a closure or sun protection home automation installation, the electromechanical actuator (11) comprising at least:
- an electric motor (16),
- a reduction gear (19),
- an electronic control unit (15), the electronic control unit (15) comprising a housing (30) and an electronic board (29), the electronic board (29) being arranged inside the housing (30), in an assembled configuration of the electronic control unit (15),
- a first electrical connection device (49), the first electrical connection device (49) being configured to electrically connect the electronic board (29) of the electronic control unit (15) to the electric motor (16), in an assembled configuration of the electromechanical actuator (11), and
- a casing (17), the casing (17) being hollow and configured to house at least the electronic control unit (15), the electric motor (16) and the reduction gear (19),
**characterized in that** the first electrical connection device (49) comprises at least:
- first electrical connection elements (60) configured to electrically connect the electronic board (29) of the electronic control unit (15) to electrical connection elements (63) of the electric motor (16), in the assembled configuration of the electromechanical actuator (11), and
- second electrical connection elements (61) configured to electrically connect the electronic board (29) of the electronic control unit (15) to electrical connection elements (64) of an additional electronic board (65) of the electric motor (16), in the assembled configuration of the electromechanical actuator (11),
**in that** the first electrical connection device (49) is configured, on the one hand, to plug onto an edge of a printed circuit board (29a) of the electronic board (29) of the electronic control unit (15) and, on the other hand, to cooperate with electric tracks of the electronic board (29) of the electronic control unit (15),
**in that** the first and second electrical connection elements (60, 61) of the first electrical connection device (49) are electrical connection elements configured to cooperate directly with the respective electrical connection elements (63, 64) of the electric motor (16) and of the additional electronic board (65) of the electric motor (16).

2. The tubular electromechanical actuator (11) for a closure or sun protection home automation installation according to claim 1, **characterized in that** the first electrical connection device (49) comprises a single housing (76) and **in that** the housing (76) includes at least the first and second electrical connection elements (60, 61) of the first electrical connection device (49).

3. The tubular electromechanical actuator (11) for a closure or sun protection home automation installation according to claim 1, **characterized in that**:
- the first electrical connection device (49) comprises a first housing (76) and a second housing (77), the second housing (77) being configured to be assembled on the first housing (76),
- the first housing (76) includes at least the first electrical connection elements (60) of the first electrical connection device (49), and
- the second housing (77) includes at least the second electrical connection elements (61) of the first electrical connection device (49).

4. The tubular electromechanical actuator (11) for a closure or sun protection home automation installation according to any one of claims 1 to 3, **characterized in that** the first electrical connection device (49) also comprises a third electrical connection element (62) configured to electrically connect the electronic board (29) of the electronic control unit (15) to the casing (17) of the electromechanical actuator (11).

5. The tubular electromechanical actuator (11) for a closure or sun protection home automation installation according to claim 4, **characterized in that** the third electrical connection element (62) of the first electrical connection device (49) is configured to produce an electrical connection between the casing (17) of the electromechanical actuator (11) and the electronic board (29) of the electronic control unit (15), so as to discharge electrostatic charges using an electrostatic charge discharging device.

6. The tubular electromechanical actuator (11) for a closure or sun protection home automation installation according to claim 4 or claim 5, **characterized in that** the casing (17) of the electromechanical actuator (11) is made from an electrically conductive material.

7. The tubular electromechanical actuator (11) for a closure or sun protection home automation installation according to any one of claims 1 to 6, **characterized in that** the housing (30) of the electronic control unit (15) comprises at least one section (301, 302) made in the form of a hollow tube, the section (301, 302) is configured to house the electronic board (29) of the electronic control unit (15), in the assembled configuration of the electromechanical actuator (11).

8. The tubular electromechanical actuator (11) for a closure or sun protection home automation installation according to any one of claims 1 to 7, **characterized in that** the electromechanical actuator (11) comprises a second electromechanical connection device (48) configured to electrically connect the electronic board (29) of the electronic control unit (15) to an electrical power cable (18), in the assembled configuration of the electromechanical actuator (11).

9. The tubular electromechanical actuator (11) for a closure or sun protection home automation installation according to claim 8, **characterized in that** the electromechanical actuator (11) also comprises:
- a closure element (21), the closure element (21) being configured to close off an end (17b) of the casing (17),
- an interface element (31), the interface element (31) being arranged between the closure element (21) and the electronic control unit (15),
and **in that** the interface element (31) is configured to cooperate, on the one hand, with the second electrical connection device (48) and, on the other hand, with the electrical power cable (18).

10. A home automation installation for closing or providing sun protection that comprises a screen (2) able to be wound on a winding tube (4) rotated by a tubular electromechanical actuator (11), **characterized in that** the tubular electromechanical actuator (11) is according to any one of claims 1 to 9.
